# EUROPÄISCHE PATENTSCHRIFT

(11) **EP 0 772 398 B1**
(45) Veröffentlichungstag und Bekanntmachung des Hinweises auf die Patenterteilung: **21.10.1998**
(21) Anmeldenummer: 95925867.4
(22) Anmeldetag: 13.07.1995
(51) Int. Cl.: A01N 61/00, A01N 37/50, A01N 47/20

(54) **VERFAHREN ZUR BEKÄMPFUNG VON SCHADPILZEN**
METHOD OF COMBATING HARMFUL FUNGI
PROCEDE POUR LUTTER CONTRE LES CHAMPIGNONS PARASITES

(30) Priorität: 21.07.1994 DE 4425774
(43) Veröffentlichungstag der Anmeldung: 14.05.1997
(73) Patentinhaber: BASF AKTIENGESELLSCHAFT, 67056 Ludwigshafen (DE)
(72) Erfinder: KÖHLE, Harald, D-67273 Bobenheim (DE); AMMERMANN, Eberhard, D-64646 Heppenheim (DE); LORENZ, Gisela, D-67434 Hambach (DE); RÖHL, Franz, D-67105 Schifferstadt (DE); BAYER, Herbert, D-68159 Mannheim (DE); SAUTER, Hubert, D-68167 Mannheim (DE); EICKEN, Karl, D-67157 Wachenheim (DE)
(86) Internationale Anmeldenummer: EP9502744
(87) Internationale Veröffentlichungsnummer: WO9603047

(56) Entgegenhaltungen:
- EP-A- 0 253 213
- EP-A- 0 741 970
- WO-A-95/15083
- BE-A- 660 891
- G. HAUG ET AL. 'Chemistry of Plant Protection. Band 6.' 1990 , SPRINGER-VERLAG , BERLIN H. BUCHENAUER "Physiological reactions in the inhibition of plant pathogenic fungi." siehe 3.5.2 "Respiration inhibitors."
- Chem.Abs.103,174360c(1985)

## Beschreibung

Die vorliegende Erfindung betrifft ein Verfahren zur Bekämpfung von Schadpilzen sowie dafür geeignete synergistische Mischungen, welche neben einem Wirkstoff I der Formel IA oder IB 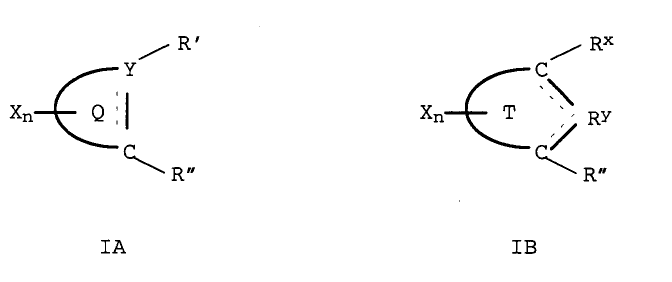 in denen .... für eine Doppel- oder Einfachbindung steht und der Index und die Substituenten die folgende Bedeutung haben:
- R': -C[CO₂CH₃]=CHOCH₃, -C[CO₂CH₃]=NOCH₃, -C[CONHCH₃]=NOCH₃, -C[CO₂CH₃]=CHCH₃, -C[CO₂CH₃]=CHCH₂CH₃, -C[COCH₃]=NOCH₃, -C[COCH₂CH₃]=NOCH₃, -N(OCH₃)-CO₂CH₃, -N(CH₃)-CO₂CH₃, -N(CH₂CH₃)-CO₂CH₃,
- R'': ein C-organischer Rest, welcher direkt oder über eine Oxy-, Mercapto-, Amino-, oder Alkylaminogruppe gebunden ist, oder
zusammen mit einer Gruppe X und dem Ring Q bzw. T, an den sie gebunden sind, ein ggf. subst. bicyclisches, partiell oder vollständig ungesättigtes System, welches neben Kohlenstoffringgliedern Heteroatome aus der Gruppe Sauerstoff, Schwefel und Stickstoff enthalten kann,
- R^{x}: -OC[CO₂CH₃]=CHOCH₃, -OC[CO₂CH₃]=CHCH₃, -OC[CO₂CH₃]=CHCH₂CH₃, -SC[CO₂CH₃]=CHOCH₃, -SC[CO₂CH₃]=CHCH₃, -SC[CO₂CH₃]=CHCH₂CH₃, -N(CH₃)C[CO₂CH₃]=CHOCH₃, -N(CH₃)C[CO₂CH₃]=NOCH₃, -CH₂C[CO₂CH₃]=CHOCH₃, -CH₂C[CO₂CH₃]=NOCH₃, -CH₂C[CONHCH₃]=NOCH₃,
- R^{y}: Sauerstoff, Schwefel, =CH- oder =N-,
- n: 0, 1, 2 oder 3, wobei die Reste X verschieden sein können, wenn n > 1 ist;
- X: Cyano, Nitro, Halogen, C₁-C₄-Alkyl, C₁-C₄-Halogenylkyl, C₁-C₄-Alkoxy, C₁-C₄-Halogenalkoxy, C₁-C₄-Alkylthio oder
für den Fall, daß n > 1 ist, eine an zwei benachbarte C-Atome des Phenylrings gebundene C₃-C₅-Alkylen-, C₃-C₅-Alkenylen-, Oxy-C₂-C₄-alkylen-, Oxy-C₁-C₃-alkylenoxy-, Oxy-C₂-C₄-alkenylen-, Oxy-C₂-C₄-alkenylenoxy- oder Butadiendiylgruppe, wobei diese Ketten ihrerseits ein bis drei der folgenden Reste tragen können: Halogen, C₁-C₄-Alkyl, C₁-C₄-Halogenalkyl, C₁-C₄-Alkoxy, C₁-C₄-Halogenalkoxy oder C₁-C₄-Alkylthio,
- Y: =C- oder -N-,
- Q: Phenyl, Pyrrolyl, Thienyl, Furyl, Pyrazolyl, Imidazolyl, Oxazolyl, Isoxazolyl, Thiazolyl, Thiadiazolyl, Triazolyl, Pyridinyl, 2-Pyridonyl, Pyrimidinyl und Triazinyl,
- T: Phenyl, Oxazolyl, Thiazolyl, Thiadiazolyl, Oxadiazolyl, Pyridinyl, Pyrimidinyl und Triazinyl.

a) einen Wirkstoff der Formel IIA enthalten,

   R¹-CO-NR²-OR³ IIA

   in der die Substituenten die folgende Bedeutung haben:
   - R¹: Wasserstoff,
   C₁-C₁₀-Alkyl, C₂-C₁₀-Alkenyl oder C₃-C₁₀-Alkinyl, C₃-C₈-Cycloalkyl oder C₄-C₈-Cycloalkenyl, Aryl, Hetaryl, Heterocyclyl, Arylcarbonyl, Hetarylcarbonyl, wobei die Reste partiell oder vollständig halogeniert sein können und/oder ein bis drei der folgenden Gruppen tragen können:
   - Cyano, Nitro, Hydroxy, Mercapto, Amino, Carboxyl, Aminocarbonyl, Aminothiocarbonyl, C₁-C₆-Alkyl, C₁-C₆-Halogenalkyl, C₁-C₆-Alkylsulfonyl, C₁-C₆-Alkylsulfoxyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylaminothiocarbonyl, Di-C₁-C₆-alkylaminothiocarbonyl,
   - C₂-C₆-Alkenyl, C₂-C₆-Alkenyloxy oder C₁-C₆-Alkylcarbonyl, wobei diese Gruppen partiell oder vollständig halogeniert sein können,
   - C₃-C₆-Cycloalkyl, Benzyl, Benzyloxy, Aryl, Aryloxy, Arylthio, Hetaryl, Hetaryloxy oder Hetaarylthio, wobei diese Gruppen partiell oder vollständig halogeniert sein können und/oder ein bis drei der folgenden Reste tragen können: Cyano, Nitro, Hydroxy, C₁-C₄-Alkyl, C₁-C₄-Halogenalkyl, C₁-C₄-Alkoxy, C₁-C₄-Halogenalkoxy oder C₁-C₄-Alkylthio,
   - C(=NORⁱ)-Aₓ-Rⁱⁱ wobei
   - Rⁱ,Rⁱⁱ: unabhängig voneinander Wasserstoff oder C₁-C₆-Alkyl bedeuten,
   - A: für Sauerstoff, Schwefel oder NH steht und
   - x: den Wert 0 oder 1 hat,
   - R², R³: unabhängig voneinander Wasserstoff, C₁-C₆-Alkyl oder Aryl
   oder
b) einen Wirkstoff der Formel IIB enthalten,

   R^{a}-CO-NR^{b}R^{c} IIB

   in der die Substituenten die folgende Bedeutung haben:
   - R^{a}: Phenyl, Furyl, Dihydropyranyl, Oxathiinyl, Oxathiinyldioxid, Pyridyl oder Thiazolyl, wobei diese Reste ein bis drei der folgenden Substituenten tragen können: Halogen, C₁-C₄-Alkyl, C₁-C₄-Halogenalkyl, C₁-C₄-Alkoxy, C₁-C₄-Halogenalkoxy oder C₁-C₄-Alkylthio;
   - R^{b}: Wasserstoff, C₁-C₄-Alkyl oder C₁-C₄-Alkoxy;
   - R^{c}: Phenyl oder Cyclohexyl, wobei diese Ringe partiell oder vollständig halogeniert sein können und/oder ein bis drei der folgenden Reste tragen können: C₁-C₄-Alkyl, C₁-C₄-Halogenalkyl, C₁-C₄-Alkoxy, C₁-C₄-Halogenalkoxy oder C₁-C₄-Alkylthio.

Es ist aus der Literatur bekannt, daß Wirkstoffe, die den Cytochrom bc₁ Komplex (Cytochrom Kompex III) hemmen, als Fungizide eingesetzt werden können [vgl. U. Brandt, U. Haase, H. Schägger, G. von Jagow: "Spezifität und Wirkmechanismus der Strobilurine", Dechema-Monographie Bd. 129, 27-38, VCH Verlagsgesellschaft Weinheim, 1993; J.M. Clough: Natural Product Reports, 1993, 565-574; F. Röhl, H. Sauter: Biochem. Soc. Trans. 22, 635 (1993)].

Beispiele für solche Wirkstoffe sind Verbindungen der Formel IA oder IB.

Wirkstoffe I der Formel IA und IB sind beispielsweise in den folgenden Schriften beschrieben: EP-A 178 826, EP-A 203 606, EP-A 203 608, EP-A 206 523, EP-A 212 859, EP-A 226 917, EP-A 229 974, EP-A 242 070, EP-A 242 081, EP-A 243 012, EP-A 243 014, EP-A 251 082, EP-A 253 213, EP-A 254 426, EP-A 256 667, EP-A 260 794, EP-A 260 832, EP-A 267 734, EP-A 273 572, EP-A 274 825, EP-A 278 595, EP-A 280 185, EP-A 291 196, EP-A 299 694, EP-A 307 101, EP-A 307 103, EP-A 310 954, EP-A 312 221, EP-A 312 243, EP-A 329 011, EP-A 331 966, EP-A 335 519, EP-A 336 211, EP-A 337 211, EP-A 341 845, EP-A 350 691, EP-A 354 571, EP-A 363 818, EP-A 370 629, EP-A 373 775, EP-A 374 811, EP-A 378 308, EP-A 378 755, EP-A 379 098, EP-A 382 375, EP-A 383 117, EP-A 384 211, EP-A 385 224, EP-A 385 357, EP-A 386 561, EP-A 386 681, EP-A 389 901, EP-A 391 451, EP-A 393 428, EP-A 393 861, EP-A 398 692, EP-A 400 417, EP-A 402 246, EP-A 405 782, EP-A 407 873, EP-A 409 369, EP-A 414 153, EP-A 416 746, EP-A 420 091, EP-A 422 597, EP-A 426 460, EP-A 429 968, EP-A 430 471, EP-A 433 233, EP-A 433 899, EP-A 439 785, EP-A 459 285, EP-A 460 575, EP-A 463 488, EP-A 463 513, EP-A 464 381, EP-A 468 684, EP-A 468 695, EP-A 468 775, EP-A 471 261, EP-A 472 224, EP-A 472 300, EP-A 474 042, EP-A 475 158, EP-A 477 631, EP-A 480 795, EP-A 483 851, EP-A 483 985, EP-A 487 409, EP-A 493 711, EP-A 498 188, EP-A 498 396, EP-A 499 823, EP-A 503 436, EP-A 508 901, EP-A 509 857, EP-A 513 580, EP-A 515 901, EP-A 517 301, EP-A 528 245, EP-A 532 022, EP-A 532 126, EP-A 532 127, EP-A 535 980, EP-A 538 097, EP-A 544 587, EP-A 546 387, EP-A 548 650, EP-A 564 928, EP-A 566 455, EP-A 567 828, EP-A 571 326, EP-A 579 071, EP-A 579 124, EP-A 579 908, EP-A 581 095, EP-A 582 902, EP-A 582 925, EP-A 583 806, EP-A 584 625, EP-A 585 751, EP-A 590 610, EP-A 596 254, WO-A 90/07,493, WO-A 92/13,830, WO-A 92/18,487, WO-A 92/18,494, WO-A 92/21,653, WO-A 93/07,116, WO-A 93/08,180, WO-A 93/08,183, WO-A 93/15,046, WO-A 93/16,986, WO-A 94/00,436, WO-A 94/05,626, WO-A 94/08,948, WO-A 94/08,968, WO-A 94/10,159, WO-A 94/11,334, JP-A 02/121,970, JP-A 04/182,461, JP-A 05/201,946, JP-A 05/201,980, JP-A 05/255,012, JP-A 05/294,948, JP-A 06/025,133, JP-A 06/025,142, JP-A 06/056,756, FR-A 2 670 781, GB-A 2 210 041, GB-A 2 218 702, GB-A 2 238 308, GB-A 2 249 092, GB-A 2 253 624, GB-A 2 255 092, DE-A 39 05 911, DE Pat. Anm. 43 05 502.8, DE Pat. Anm. 43 10 143.7, DE Pat. Anm. 43 18 397.2, DE Pat. Anm. 43 34 709.6, DE Pat. Anm. 44 03 446.6, DE Pat. Anm. 44 03 447.4, DE Pat. Anm. 44 03 448.2, DE Pat. Anm. 44 10 424.3, DE Pat. Anm. 44 21 180.5, DE Pat. Anm. 44 21 182.1, DE Pat. Anm. 44 15 483.6, DE Pat. Anm. 44 23 615.8 und DE Pat. Anm. 44 23 612.3.

Bei der Anwendung dieser Wirkstoffe zeigt sich jedoch, daß ihre Wirkung nur vorübergehend ist, d.h. bereits nach einiger Zeit tritt erneuter Wachstum des Pilzes auf.

Des weiteren sind aus der Literatur Verbindungen IIA bekannt [G.R. Schonbaum et al.: Plant Physiol. 47, 124-128 (1971)] , die die sogenannte cyanidresistente Atmung bei Pflanzen inhibieren. Eine fungizide Wirkung derartiger Verbindungen ist jedoch nicht bekannt.

Verbindungen der Formel IIB sind aus der Literatur als Fungizide bekannt [vgl. Modern Selective Fungicides, Edit.: H. Lyr, VEB Gustav Fischer Verlag, Jena, Leibzig 1987 und die dort zitierte Literatur]. Diese Verbindungen zeigen jedoch kein breites und befriedigendes Wirkungsspektrum.

Aus der EP-A 741 970, die für die Vertragsstaaten ES, FR und IT Stand der Technik i. S. d. Art. 54(3) darstellt, sind Mischungen aus Verbindungen der Formel I mit verschiedenen Fungiziden bekannt.

Der vorliegenden Erfindung lag die Aufgabe zugrunde, die Nachteile bei der Anwendung der Verbindungen IA bzw. IB zu beheben.

Demgemäß wurde gefunden, daß sich Schadpilze grundsätzlich besser bekämpfen lassen, wenn man neben einem Wirkstoff IA bzw. IB, der die Atmung am Cytochrom Komplex III hemmt, einen weiteren Wirkstoff der Formel IIA oder der Formel IIB anwendet.

Das erfindungsgemäße Verfahren beruht wahrscheinlich darauf, daß der Pilz bei Hemmung der Atmung am Cytochrom Komplex III einen Nebenweg der alternativen Atmung benutzt, so daß keine völlige Abtötung auftritt. Das würde bedeuten, daß die Wirkstoffe der Formel IIA bzw. IIB geeignet sind, eine alternative Atmung zu hemmen. Die Kombination der Hemmung sowohl der Atmung über den Cytochrom Komplex III als auch der alternativen Atmung könnte dafür verantwortlich sein, daß der Pilz vollständig abgetötet wird.

Durch die erfindungsgemäße Kombination entsprechender Wirkstoffe wird eine effektivere Bekämpfung des Schadpilzes erreicht, da durch die Kombination der Wirkstoffe IA bzw. IB und IIA bzw. IIB geringere Aufwandmengen an den Einzelwirkstoffen erforderlich sind (Synergismus).

Zur Hemmung der Atmung am Cytochrom Komplex III eignen sich im erfinderischen Verfahren grundsätzlich alle in den eingangs genannten Schriften beschriebenen Wirkstoffe, wobei insbesondere die in den dort gegebenen Beispielen genannten Verbindungen in Betracht zu ziehen sind. Von besonderer Bedeutung sind dabei Verbindungen IA und IB, in denen R'' für eine der folgenden Gruppen steht:
ggf. subst. Aryloxy, ggf. subst. Hetaryloxy, ggf. subst. Aryloxymethylen, ggf. subst. Hetaryloxymethylen, ggf. subst. Arylethenylen, ggf. subst. Hetarylethenylen, oder eine Gruppe
RαRβC=NOCH₂- oder RγON=CRδCRε=NOCH₂ wobei die Reste Rα, Rβ Rγ, Rδ und Rε im allgemeinen und im besonderen die in den folgenden Schriften beschriebenen Bedeutungen haben: EP-A 370 629, EP-A 414 153, EP-A 426 460, EP-A 460 575, EP-A 463 488, EP-A 472 300, EP-A 498 188, EP-A 498 396, EP-A 515 901, EP-A 585 751, WO-A 90/07,493, WO-A 92/13,830, WO-A 92/18,487, WO-A 92/18,494, WO-A 93/15,046, WO-A 93/16,986, WO-A 94/08,948, WO-A 94/08,968, JP-A 05/201,946, JP-A 05/255,012, JP-A 05/294,948, JP-A 06/025,133, JP-A 06/025,142, DE Pat. Anm. 44 03 447.., DE Pat. Anm. 44 03 448.., DE Pat. Anm. 44 21 180.5 und DE Pat. Anm. 44 21 182.1;
besonders bevorzugte Reste *"ggf. subst. Aryloxy, ggf. subst. Hetaryloxy"* entsprechen im allgemeinen und im besonderen den in den folgenden Schriften beschriebenen Bedeutungen: EP-A 178 826, EP-A 242 070, EP-A 242 081, EP-A 253 213, EP-A 254 426, EP-A 256 667, EP-A 260 794, EP-A 280 185, EP-A 307 103, EP-A 341 845, EP-A 382 375, EP-A 393 861, EP-A 398 692, EP-A 405 782, EP-A 430 471, EP-A 468 684, EP-A 468 695, EP-A 477 631, EP-A 483 985, EP-A 498 188, EP-A 513 580, EP-A 515 901, WO-A 93/15,046, WO-A 94/10,159, GB-A 2 253 624, JP-A 04/182,461 und DE Pat. Anm. 44 23 612.3;
besonders bevorzugte Reste *"ggf. subst. Aryloxymethylen, ggf. subst. Hetaryloxymethylen"* entsprechen im allgemeinen und im besonderen den in den folgenden Schriften beschriebenen Bedeutungen: EP-A 178 826, EP-A 226 917, EP-A 253 213, EP-A 254 426, EP-A 278 595, EP-A 280 185, EP-A 299 694, EP-A 335 519, EP-A 350 691, EP-A 363 818, EP-A 373 775, EP-A 378 308, EP-A 385 224, EP-A 386 561, EP-A 398 692, EP-A 400 417, EP-A 407 873, EP-A 472 224, EP-A 477 631, EP-A 498 188, EP-A 498 396, EP-A 513 580, EP-A 515 901, EP-A 579 124, WO-A 93/08,180, WO-A 93/15,046, WO-A 94/00,436, JP-A 04/182,461, DE Anm. Nr. 43 05 502.., DE Anm. Nr. 44 10 424.. und DE Pat. Anm. 44 15 483.6;
besonders bevorzugte Reste *"ggf. subst. Arylethenylen, ggf. subst. Hetarylethenylen"* entsprechen im allgemeinen und im besonderen den in den folgenden Schriften beschriebenen Bedeutungen: EP-A 178 826, EP-A 203 606, EP-A 253 213, EP-A 254 426, EP-A 280 185, EP-A 378 755, EP-A 398 692, EP-A 402 246, EP-A 474 042, EP-A 475 158, EP-A 477 631, EP-A 487 409, EP-A 498 188, EP-A 498 396, EP-A 513 580, EP-A 515 901, EP-A 528 245, EP-A 544 587, WO-A 93/15,046, WO-A 94/11,334, FR-A 2 670 781 und DE Pat. Anm. 44 23 615.8;
Besonders bevorzugte Wirkstoffe der Formel IA, in denen R' für *-C[CO*_{*2*}*CH*_{*3*}*]=CHOCH*_{*3*} steht, entsprechen im allgemeinen und im besonderen den in den folgenden Schriften beschriebenen Verbindungen: EP-A 178 826, EP-A 203 606, EP-A 226 917, EP-A 242 070, EP-A 242 081, EP-A 256 667, EP-A 260 794, EP-A 278 595, EP-A 299 694, EP-A 307 103, EP-A 335 519, EP-A 341 845, EP-A 350 691, EP-A 370 629, EP-A 373 775, EP-A 378 308, EP-A 378 755, EP-A 382 375, EP-A 385 224, EP-A 386 561, EP-A 393 861, EP-A 402 246, EP-A 405 782, EP-A 407 873, EP-A 414 153, EP-A 426 460, EP-A 430 471, EP-A 463 488, EP-A 468 695, EP-A 472 224, EP-A 474 042, EP-A 475 158, EP-A 483 985, EP-A 487 409, EP-A 515 901, EP-A 528 245, EP-A 544 587, WO-A 90/07,493, WO-A 92/18,487, WO-A 92/18,494, WO-A 93/08,180, WO-A 93/16,986, WO-A 94/00,463, WO-A 94/08,948, WO-A 94/08,968, WO-A 94/10,159, WO-A 94/11,334, FR-A 2 670 781, JP-A 06/025,133, DE Anm. Nr. 44 03 447.., DE Anm. Nr. 44 10 424.. und DE Pat. Anm. 44 21 180.5;
besonders bevorzugte Wirkstoffe der Formel I, in denen R' für *-C[CO*_{*2*}*CH*_{*3*}*]=NOCH*_{*3*} steht, entsprechen im allgemeinen und im besonderen den in den folgenden Schriften beschriebenen Verbindungen: EP-A 253 213, EP-A 254 426, EP-A 299 694, EP-A 363 818, EP-A 378 308, EP-A 385 224, EP-A 386 561, EP-A 400 417, EP-A 407 873, EP-A 460 575, EP-A 463 488, EP-A 468 684, EP-A 472 300, EP-A 515 901, WO-A 94/00,436, WO-A 94/08,948, WO-A 94/10,159, WO-A 94/11,334, JP-A 05/201,946, JP-A 05/255,012, JP-A 05/294,948, DE Anm. Nr. 44 03 447.., DE Anm. Nr. 44 10 424.. und DE Pat. Anm. 44 21 180.5;
besonders bevorzugte Wirkstoffe der Formel I, in denen R' für *-C[CONHCH*_{*3*}*]=NOCH*_{*3*} steht, entsprechen im allgemeinen und im besonderen den in den folgenden Schriften beschriebenen Verbindungen: EP-A 398 692, EP-A 463 488, EP-A 477 631, EP-A 515 901, EP-A 579 124, EP-A 585 751, WO-A 92/13,830, WO-A 93/08,180, WO-A 94/08,948, WO-A 94/10,159, WO-A 94/11,334, GB-A 2 253 624, JP-A 04/182,461, JP-A 05/201,946, JP-A 05/255,012, JP-A 05/294,948, DE Anm. Nr. 43 05 502.., DE Anm. Nr. 44 03 448.., DE Anm. Nr. 44 10 424.., DE Pat. Anm. Nr. 44 23 615.8 und DE Pat. Anm. 44 21 182.1;
besonders bevorzugte Wirkstoffe der Formel I, in denen R' für *-C[CO*_{*2*}*CH*_{*3*}*]=CHCH*_{*3*} oder *-C[CO*_{*2*}*CH*_{*3*}*]=CHCH*_{*2*}*CH*_{*3*} steht, entsprechen im allgemeinen und im besonderen den in den folgenden Schriften beschriebenen Verbindungen: EP-A 280 185, EP-A 463 488, EP-A 501 901, EP-A 513 580, EP-A 515 901, DE Anm. Nr. 44 03 447.., DE Anm. Nr. 44 10 424.., DE Pat. Anm. Nr. 44 21 180.5 und DE Pat. Anm. Nr. 44 15 483.6;
besonders bevorzugte Wirkstoffe der Formel I, in denen R' für *-C[COCH*_{*3*}*]=NOCH*_{*3*} oder *-C[COCH*_{*2*}*CH*_{*3*}*]=NOCH*_{*3*} steht, entsprechen im allgemeinen und im besonderen den in der EP-A 498 188 beschriebenen Verbindungen;
besonders bevorzugte Wirkstoffe der Formel I, in denen R' für *-N(OCH*_{*3*}*)CO*_{*2*}*CH*_{*3*}, *-N(CH*_{*3*}*)-CO*_{*2*}*CH*_{*3*} oder *-N(CH*_{*2*}*CH*_{*3*}*)-CO*_{*2*}*CH*_{*3*} steht, entsprechen im allgemeinen und im besonderen den in den folgenden Schriften beschriebenen Verbindungen: EP-A 498 396, WO-A 93/15,046, JP-A 06/025,142 und DE Pat. Anm. 44 23 612.3;
Besonders bevorzugte Wirkstoffe der Formel I, in denen R' für *-OC[CO*_{*2*}*CH*_{*3*}*]=CHOCH*_{*3*}, *-OC[CO*_{*2*}*CH*_{*3*}*]=CHCH*_{*3*}*, -OC[CO*_{*2*}*CH*_{*3*}*]=CHCH*_{*2*}*CH*_{*3*}*, -OC[COCH*_{*2*}*CH*_{*3*}*]=NOCH*_{*3*}*, -SC[CO*_{*2*}*CH*_{*3*}*]=CHOCH*_{*3*}*, -SC[CO*_{*2*}*CH*_{*3*}*]=CHCH*_{*3*}*, -SC[CO*_{*2*}*CH*_{*3*}*]=CHCH*_{*2*}*CH*_{*3*}*, -N(CH*_{*3*}*)C[CO*_{*2*}*CH*_{*3*}*]=CHOCH*_{*3*}*, -N(CH*_{*3*}*)C[CO*_{*2*}*CH*_{*3*}*]=NOCH*_{*3*}*, -CH*_{*2*}*C[CO*_{*2*}*CH*_{*3*}*]=CHOCH*_{*3*}*, -CH*_{*2*}*C[CO*_{*2*}*CH*_{*3*}*]=NOCH*_{*3*} oder *-CH*_{*2*}*C[CONHCH*_{*3*}*]=NOCH*_{*3*} steht, entsprechen im allgemeinen und im besonderen den in den folgenden Schriften beschriebenen Verbindungen: EP-A 212 859, EP-A 331 966, EP-A 383 117, EP-A 384 211, EP-A 389 901, EP-A 409 369, EP-A 464 381, EP-A 471 261, EP-A 503 436, EP-A 546 387, EP-A 548 650, EP-A 579 908 und EP-A 584 625.

Beispiele für insbesondere geeignete Wirkstoffe I sind in den folgenden Tabellen zusammengestellt.

**Tabelle 1.1A**

| Verbindungen der Formel IA, in denen Q Phenyl bedeutet, R' für *-C(CO*_{*2*}*CH*_{*3*}*)=CHOCH*_{*3*} steht, n den Wert 0 hat, R'' für ggf. subst. (Het)aryl-oxymethylen steht, wobei die ggf. subst. (Het)arylgruppe die folgende Bedeutung hat | | |
|---|---|---|
| **Nr.** | **ggf. subst. (Het)aryl** | **Literatur** |
| **I.1A-1** | 2-CH₃-C₆H₄ | EP-A 226 917 |
| **I.1A**-2 | 2,5-(CH₃)₂-C₆H₃ | EP-A 226 917 |
| **I.1A**-3 | 2-CH₃, 4-C[CH₃]=NOCH₃-C₆H₃ | EP-A 386 561 |
| **I.1A**-4 | 2-CH₂CH₂CH₃, 6-CF₃-pyrimidin-4-yl | EP-A 407 873 |
| **I.1A-5** | 2,4-(CH₃)₂-C₆H₃ | EP-A 226 917 |

**Tabelle 1.1B**

| Verbindungen der Formel IA, in denen R' für *-C(CO*_{*2*}*CH*_{*3*}*)=CHOCH*_{*3*} steht, Q Phenyl bedeutet, n den Wert 0 hat, R'' fuhr ggf. subst. (Het)aryl-oxy steht, wobei die ggf. subst. (Het)arylgruppe die folgende Bedeutung hat | | |
|---|---|---|
| **Nr.** | **ggf. subst. (Het)aryl** | **Literatur** |
| **I.1B-1** | C₆H₅ | EP-A 178 826 |
| **I.1B**-2 | 6-[2-CN-C₆H₄-O]-pyrimidin-4-yl | EP-A 382 375 |

**Tabelle 1.1C**

| Verbindungen der Formel IA, in denen R' für *-C(CO*_{*2*}*CH*_{*3*}*)=CHOCH*_{*3*} steht, Q Phenyl bedeutet, n den Wert 0 hat, R'' für ggf. subst. (Het)aryl-ethenylen steht, wobei die ggf. subst. (Het)arylgruppe die folgende Bedeutung hat | | |
|---|---|---|
| **Nr.** | **ggf. subst. (Het)aryl** | **Literatur** |
| **I.1C-1** | 1-(2,4-Cl₂-C₆H₃), 5-CF₃-pyrazol-4-yl | EP-A 528 245 |
| **I.1C**-2 | 1-(4-Cl-C₆H₄)-pyrazol-4-yl | EP-A 378 755 |
| **I.1C**-3 | 3-CF₃-C₆H₄ | EP-A 203 606 |
| **I.1C**-4 | 3-Cl-C₆H₄ | EP-A 203 606 |
| **I.1C**-5 | 4-C₆H₅-C₆H₄ | EP-A 203 606 |

**Tabelle 1.1D**

| Verbindungen der Formel IA, in denen Q Phenyl bedeutet, R' für *-C(CO*_{*2*}*CH*_{*3*}*)=CHOCH*_{*3*} steht, n den Wert 0 hat, R'' für CH₂ON=CR^{α}R^{β} steht, wobei R^{α} und R^{β} die folgende Bedeutung haben | | | |
|---|---|---|---|
| **Nr.** | **R**^{**α**} | ^{**Rβ**} | **Literatur** |
| **I.1D-1** | CH₃ | 4-Cl-C₆H₄ | EP-A 370 629 |
| **I.1D**-2 | CH₃ | 3-CF₃-C₆H₄ | EP-A 370 629 |
| **I.1D**-3 | CH₃ | 4-OCH₂CH₃-pyrimidin-2-yl | WO-A 92/18,487 |

**Tabelle 1.1E**

| Verbindungen der Formel IA, in denen Q Phenyl bedeutet, R' für *-C(CO*_{*2*}*CH*_{*3*}*)=CHOCH*_{*3*} steht, n den Wert 0 hat, R'' für CH₂ON=CR^{γ}CR^{δ}=NOR^{ε} steht, wobei R^{γ}, R^{δ} und R^{ε} die folgende Bedeutung haben | | | | |
|---|---|---|---|---|
| **Nr.** | **R**^{**γ**} | **R**^{**δ**} | **R**^{**ε**} | **Literatur** |
| **I.1E-1** | CH₃ | CH₃ | CH₃ | DE Anm. Nr. 44 03 447.4 |
| **I.1E**-2 | CH₃ | CH₃ | CH₂CH₃ | DE Anm. Nr. 44 03 447.4 |
| **I.1E**-3 | CH₃ | C₆H₅ | CH₃ | DE Anm. Nr. 44 03 447.4 |
| **I.1E**-4 | CH₃ | C₆H₅ | CH₂CH₃ | DE Anm. Nr. 44 03 447.4 |
| **I.1E**-5 | CH₃ | 4-Cl-C₆H₄ | CH₃ | DE Anm. Nr. 44 21 180.5 |
| **I.1E**-6 | CH₃ | 4-Cl-C₆H₄ | CH₂CH₃ | DE Anm. Nr. 44 21 180.5 |

**Tabelle 1.2A**

| Verbindungen der Formel IA, in denen Q Phenyl bedeutet, R' für *-C(CO*_{*2*}*CH*_{*3*}*)=NOCH*_{*3*} steht, n den Wert 0 hat, R'' für ggf. subst. (Het)aryl-oxymethylen steht, wobei die ggf. subst. (Het)arylgruppe die folgende Bedeutung hat | | |
|---|---|---|
| **Nr.** | **ggf. subst. (Het)aryl** | **Literatur** |
| **I.2A-1** | 2-CH₃-C₆H₄ | EP-A 253 213 |
| **I.2A**-2 | 2,5-(CH₃)₂-C₆H₃ | EP-A 400 417 |
| **I.2A**-3 | 2,4-(CH₃)₂-C₆H₃ | EP-A 400 417 |
| **I.2A**-4 | 2,3,5-(CH₃)₃-C₆H₂ | EP-A 400 417 |
| **I.2A**-5 | 2-Cl, 5-CH₃-C₆H₃ | EP-A 400 417 |
| **I.2A**-6 | 2-CH₃, 4-C[CH₃]=NOCH₃-C₆H₃ | EP-A 386 561 |

**Tabelle 1.2B**

| Verbindungen der Formel IA, in denen Q Phenyl bedeutet, R' für *-C(CO*_{*2*}*CH*_{*3*}*)=NOCH*_{*3*} steht, n den Wert 0 hat, R'' für ggf. subst. (Het)aryl-oxy steht, wobei die ggf. subst. (Het)arylgruppe die folgende Bedeutung hat | | |
|---|---|---|
| **Nr.** | **ggf. subst. (Het)aryl** | **Literatur** |
| **I.2B-1** | C₆H₅ | EP-A 253 213 |
| **I.2B**-2 | 6-[2-CN-C₆H₄-O]-pyrimidin-4-yl | EP-A 468 684 |

**Tabelle 1.2C**

| Verbindungen der Formel IA, in denen Q Phenyl bedeutet, R' für *-C(CO*_{*2*}*CH*_{*3*}*)=NOCH*_{*3*} steht, n den Wert 0 hat, R'' für CH₂ON=CR^{α}R^{β} steht, wobei R^{α} und R^{β} die folgende Bedeutung haben | | | |
|---|---|---|---|
| **Nr.** | **R**^{**α**} | **R**^{**β**} | **Literatur** |
| **I.2C-1** | CH₃ | 4-Cl-C₆H₄ | EP-A 463 488 |
| **I.2C**-2 | CH₃ | 3-Cl-C₆H₄ | EP-A 463 488 |
| **I.2C**-3 | CH₃ | 4-CF₃-C₆H₄ | EP-A 463 488 |
| **I.2C**-4 | CH₃ | 3-CF₃-C₆H₄ | EP-A 463 488 |
| **I.2C**-5 | CH₃ | 4-CH₃-C₆H₄ | EP-A 463 488 |
| **I.2C**-6 | CH₃ | 4-OCH₂CH₃-pyrimidin-2-yl | EP-A 472 300 |
| **I.2C**-7 | CH₃ | 3,5-Cl₂-C₆H₃ | EP-A 463 488 |

**Tabelle 1.2D**

| Verbindungen der Formel IA, in denen Q Phenyl bedeutet, R' für *-C(CO*_{*2*}*CH*_{*3*}*)=NOCH*_{*3*} steht, n den Wert 0 hat, R'' für CH₂ON=CR^{γ}CR^{δ}=NOR^{ε} steht, wobei R^{γ}, R^{δ} und R^{ε} die folgende Bedeutung haben | | | | |
|---|---|---|---|---|
| **Nr.** | **R**^{**γ**} | **R**^{**δ**} | **R**^{**ε**} | **Literatur** |
| **I.2D-1** | CH₃ | CH₃ | CH₃ | DE Anm. Nr. 44 03 447.4 |
| **I.2D**-2 | CH₃ | CH₃ | CH₂CH₃ | DE Anm. Nr. 44 03 447.4 |
| **I.2D**-3 | CH₃ | C₆H₅ | CH₃ | DE Anm. Nr. 44 03 447.4 |
| **I.2D**-4 | CH₃ | C₆H₅ | CH₂CH₃ | DE Anm. Nr. 44 03 447.4 |
| **I.2D**-5 | CH₃ | 4-Cl-C₆H₄ | CH₃ | DE Anm. Nr. 44 21 180.5 |
| **I.2D**-6 | CH₃ | 4-Cl-C₆H₄ | CH₂CH₃ | DE Anm. Nr. 44 21 180.5 |

**Tabelle 1.3A**

| Verbindungen der Formel IA, in denen Q Phenyl bedeutet, R' für *-C(CONHCH*_{*3*}*)=NOCH*_{*3*} steht, n den Wert 0 hat, R'' für ggf. subst. (Het)aryl-oxymethylen steht, wobei die ggf. subst. (Het)arylgruppe die folgende Bedeutung hat | | |
|---|---|---|
| **Nr.** | **ggf. subst. (Het)aryl** | **Literatur** |
| **I.3A-1** | 2-CH₃-C₆H₄ | EP-A 477 631 |
| **I.3A**-2 | 2,5-(CH₃)₂-C₆H₃ | EP-A 477 631 |
| **I.3A**-3 | 2,4-(CH₃)₂-C₆H₃ | EP-A 477 631 |
| **I.3A**-4 | 2,3,5-(CH₃)₃-C₆H₂ | EP-A 477 631 |
| **I.3A**-5 | 2-CH₃, 4-C[CH₃]=NOCH₃-C₅H₃ | EP-A 579 124 |
| **I.3A**-6 | 1-[4-Cl-C₆H₄]-pyrazol-3-yl | DE Anm. Nr. 43 05 502.8 |
| **I.3A**-7 | 1-[2,4-Cl₂-C₆H₃]-pyrazol-3-yl | DE Anm. Nr. 43 05 502.8 |

**Tabelle 1.3B**

| Verbindungen der Formel IA, in denen Q Phenyl bedeutet, R' für *-C(CONHCH*_{*3*}*)=NOCH*_{*3*} steht, n den Wert 0 hat, R'' für ggf. subst. (Het)aryl-oxy steht, wobei die ggf. subst. (Het)arylgruppe die folgende Bedeutung hat | | |
|---|---|---|
| **Nr.** | **ggf. subst. (Het)aryl** | **Literatur** |
| **I.3B-1** | C₆H₅ | EP-A 398 692 |
| **I.3B**-2 | 6-[2-CN-C₆H₄-O]-pyrimidin-4-yl | GB-A 2 253 624 |

**Tabelle 1.3C**

| Verbindungen der Formel IA, in denen Q Phenyl bedeutet, R' für *-C(CONHCH*_{*3*}*)=NOCH*_{*3*} steht, n den Wert 0 hat, R'' für ggf. subst. (Het)aryl-ethenylen steht, wobei die ggf. subst. (Het)arylgruppe die folgende Bedeutung hat | | |
|---|---|---|
| **Nr.** | **ggf. subst. (Het)aryl** | **Literatur** |
| **I.3C-1** | 1-[2,4-Cl₂-C₆H₃], 5-CF₃-pyrazol-4-yl | DE Anm. Nr. 44 23 615.8 |

**Tabelle 1.3D**

| Verbindungen der Formel IA, in denen Q Phenyl bedeutet, R' für *-C(CONHCH*_{*3*}*)=NOCH*_{*3*} steht, n den Wert 0 hat, R'' für CH₂ON=CR^{α}R^{β} steht, wobei R^{α} und R^{β} die folgende Bedeutung haben | | | |
|---|---|---|---|
| **Nr.** | **R**^{**α**} | **R**^{**β**} | **Literatur** |
| **I.3D-1** | CH₃ | 4-Cl-C₆H₄ | EP-A 463 488 |
| **I.3D**-2 | CH₃ | 3-Cl-C₆H₄ | EP-A 463 488 |
| **I.3D**-3 | CH₃ | 4-CF₃-C₆H₄ | EP-A 585 751 |
| **I.3D**-4 | CH₃ | 3-CF₃-C₆H₄ | EP-A 585 751 |
| **I.3D**-5 | CH₃ | 4-CH₃-C₆H₄ | EP-A 463 488 |
| **I.3D**-6 | CH₃ | 3,5-Cl₂-C₆H₃ | EP-A 463 488 |
| **I.3D**-7 | CH₃ | 2-OCH₂CH₃-pyrimidin-2-yl | WO-A 92/13,830 |

**Tabelle 1.3E**

| Verbindungen der Formel IA, in denen Q Phenyl bedeutet, R' für *-C(CONHCH*_{*3*}*)=NOCH*_{*3*} steht, n den Wert 0 hat, R'' für CH₂ON=CR^{γ}CR^{δ}=NOR^{ε} steht, wobei R^{γ}, R^{δ} und R^{ε} die folgende Bedeutung haben | | | | |
|---|---|---|---|---|
| **Nr.** | **R**^{**γ**} | **R**^{**δ**} | **R**^{**ε**} | **Literatur** |
| **I.3E-1** | CH₃ | CH₃ | CH₃ | DE Pat. Anm. 44 21 182.1 |
| **I.3E**-2 | CH₃ | CH₃ | CH₂CH₃ | DE Pat. Anm. 44 21 182.1 |
| **I.3E**-3 | CH₃ | C₆H₅ | CH₃ | DE Pat. Anm. 44 21 182.1 |
| **I.3E**-4 | CH₃ | C₆H₅ | CH₂CH₃ | DE Pat. Anm. 44 21 182.1 |
| **I.3E**-5 | CH₃ | 4-Cl-C₆H₄ | CH₃ | DE Pat. Anm. 44 21 182.1 |
| **I.3E**-6 | CH₃ | 4-Cl-C₆H₄ | CH₂CH₃ | DE Pat. Anm. 44 21 182.1 |
| **I.3E**-7 | CH₃ | 4-F-C₆H₄ | CH₃ | DE Pat. Anm. 44 21 182.1 |

**Tabelle 1.4A**

| Verbindungen der Formel IA, in denen Q Phenyl bedeutet, R' für *-C(CO*_{*2*}*CH*_{*3*}*)=CHCH*_{*3*} steht, n den Wert 0 hat, R'' für ggf. subst. (Het)aryl-oxymethylen steht, wobei die ggf. subst. (Het)arylgruppe die folgende Bedeutung hat | | |
|---|---|---|
| **Nr.** | **ggf. subst. (Het)aryl** | **Literatur** |
| **I.4A-1** | 2-CH₃-C₆H₄ | EP-A 280 185 |
| **I.4A**-2 | 2,5-(CH₃)₂-C₆H₃ | EP-A 513 580 |
| **I.4A**-3 | 2,4-(CH₃)₂-C₆H₃ | EP-A 513 580 |
| **I.4A**-4 | 2,3,5-(CH₃)₃-C₆H₂ | EP-A 513 580 |
| **I.4A**-5 | 2-Cl, 5-CH₃-C₆H₃ | EP-A 513 580 |
| **I.4A**-6 | 2-CH₃, 4-C[CH₃]=NOCH₃-C₆H₃ | EP-A 513 580 |
| **I.4A**-7 | 1-[4-Cl-C₆H₄]-pyrazol-3-yl | DE Pat. Anm. 44 15 483.6 |

**Tabelle 1.4B**

| Verbindungen der Formel IA, in denen Q Phenyl bedeutet, R' für *-C(CO*_{*2*}*CH*_{*3*}*)=CHCH*_{*3*} steht, n den Wert 0 hat, R'' für ggf. subst. (Het)aryl-oxy steht, wobei die ggf. subst. (Het)arylgruppe die folgende Bedeutung hat | | |
|---|---|---|
| **Nr.** | **ggf. subst. (Het)aryl** | **Literatur** |
| **I.4B-1** | C₆H₅ | EP-A 513 580 |

**Tabelle 1.4C**

| Verbindungen der Formel IA, in denen Q Phenyl bedeutet, R' für *-C(CO*_{*2*}*CH*_{*3*}*)=CHCH*_{*3*} steht, n den Wert 0 hat, R'' für CH₂ON=CR^{γ}CR^{δ}=NOR^{ε} steht, wobei R^{γ}, R^{δ} und R^{ε} die folgende Bedeutung haben | | | | |
|---|---|---|---|---|
| **Nr.** | **R**^{**γ**} | **R**^{**δ**} | **R**^{**ε**} | **Literatur** |
| **I.4C-1** | CH₃ | CH₃ | CH₃ | DE Pat. Anm. 44 21 180.5 |
| **I.4C**-2 | CH₃ | CH₃ | CH₂CH₃ | DE Pat. Anm. 44 21 180.5 |
| **I.4C**-3 | CH₃ | C₆H₅ | CH₃ | DE Pat. Anm. 44 21 180.5 |
| **I.4C**-4 | CH₃ | C₆H₅ | CH₂CH₃ | DE Pat. Anm. 44 21 180.5 |
| **I.4C**-5 | CH₃ | 4-Cl-C₆H₄ | CH₃ | DE Pat. Anm. 44 21 180.5 |
| **I.4C**-6 | CH₃ | 4-Cl-C₆H₄ | CH₂CH₃ | DE Pat. Anm. 44 21 180.5 |

**Tabelle 1.5A**

| Verbindungen der Formel IA, in denen Q Phenyl bedeutet, R' für *-C(CO*_{*2*}*CH*_{*3*}*)=CHCH*_{*2*}*CH*_{*3*} steht, n den Wert 0 hat, R'' für ggf. subst. (Het)aryl-oxymethylen steht, wobei die ggf. subst. (Het)arylgruppe die folgende Bedeutung hat | | |
|---|---|---|
| **Nr.** | **ggf. subst. (Het)aryl** | **Literatur** |
| **I.5A-1** | 2-CH₃-C₆H₄ | EP-A 513 580 |
| **I.5A**-2 | 2,5-(CH₃)₂-C₆H₃ | EP-A 513 580 |
| **I.5A**-3 | 2,4-(CH₃)₂-C₆H₃ | EP-A 513 580 |
| **I.5A**-4 | 2,3,5-(CH₃)₃-C₆H₂ | EP-A 513 580 |
| **I.5A**-5 | 2-Cl, 5-CH₃-C₅H₃ | EP-A 513 580 |
| **I.5A**-6 | 2-CH₃, 4-C[CH₃]=NOCH₃-C₅H₃ | EP-A 513 580 |

**Tabelle 1.5B**

| Verbindungen der Formel IA, in denen Q Phenyl bedeutet, R' für *-C(CO*_{*2*}*CH*_{*3*}*)=CHCH*_{*2*}*CH*₃ steht, n den Wert 0 hat, R'' für ggf. subst. (Het)aryl-oxy steht, wobei die ggf. subst. (Het)arylgruppe die folgende Bedeutung hat | | |
|---|---|---|
| **Nr.** | **ggf. subst. (Het)aryl** | **Literatur** |
| **I.5B-1** | C₆H₅ | EP-A 513 580 |

**Tabelle 1.5C**

| Verbindungen der Formel IA, in denen Q Phenyl bedeutet, R' für *-C(CO*_{*2*}*CH*_{*3*}*)=CHCH*_{*2*}*CH*_{*3*} steht, n den Wert 0 hat, R'' für CH₂ON=CR^{γ}CR^{δ}=NOR^{ε} steht, wobei R^{γ}, R^{δ} und R^{ε} die folgende Bedeutung haben | | | | |
|---|---|---|---|---|
| **Nr.** | **R**^{**γ**} | **R**^{**δ**} | **R**^{**ε**} | **Literatur** |
| **I.5C-1** | CH₃ | CH₃ | CH₃ | DE Pat. Anm. 44 21 180.5 |
| **I.5C**-2 | CH₃ | CH₃ | CH₂CH₃ | DE Pat. Anm. 44 21 180.5 |
| **I.5C**-3 | CH₃ | C₆H₅ | CH₃ | DE Pat. Anm. 44 21 180.5 |
| **I.5C**-4 | CH₃ | C₆H₅ | CH₂CH₃ | DE Pat. Anm. 44 21 180.5 |
| **I.5C**-5 | CH₃ | 4-Cl-C₆H₄ | CH₃ | DE Pat. Anm. 44 21 180.5 |
| **I.5C**-6 | CH₃ | 4-Cl-C₆H₄ | CH₂CH₃ | DE Pat. Anm. 44 21 180.5 |

**Tabelle 1.6A**

| Verbindungen der Formel IA, in denen Q Phenyl bedeutet, R' für *-C(COCH*_{*3*}*)=NOCH*_{*3*} steht, n den Wert 0 hat, R'' für ggf. subst. (Het)aryl-oxymethylen steht, wobei die ggf. subst. (Het)arylgruppe die folgende Bedeutung hat | | |
|---|---|---|
| **Nr.** | **ggf. subst. (Het)aryl** | **Literatur** |
| **I.6A**-**1** | 2-CH₃-C₆H₄ | EP-A 498 188 |
| **I.6A**-2 | 2,5-(CH₃)₂-C₆H₃ | EP-A 498 188 |
| **I.6A**-3 | 2,4-(CH₃)₂-C₆H₃ | EP-A 498 188 |
| **I.6A**-4 | 2,3,5-(CH₃)₃-C₆H₂ | EP-A 498 188 |
| **I.6A-5** | 2-CH₃, 4-C[CH₃]=NOCH₃-C₆H₃ | EP-A 498 188 |

**Tabelle 1.6B**

| Verbindungen der Formel IA, in denen Q Phenyl bedeutet, R' für *-C(COCH*_{*3*}*)=NOCH*_{*3*} steht, n den Wert 0 hat, R'' für ggf. subst. (Het)aryl-oxy steht, wobei die ggf. subst. (Het)arylgruppe die folgende Bedeutung hat | | |
|---|---|---|
| **Nr.** | **ggf. subst. (Het)aryl** | **Literatur** |
| **I.6B-1** | C₆H₅ | EP-A 498 188 |
| **I.6B-2** | 6-[2-CN-C₆H₄-O]-pyrimidin-4-yl | EP-A 498 188 |

**Tabelle 1.7A**

| Verbindungen der Formel IA, in denen Q Phenyl bedeutet, R' für *-C(COCH*_{*2*}*CH*_{*3*}*)=NOCH*_{*3*} steht, n den Wert 0 hat, R'' für ggf. subst. (Het)aryl-oxymethylen steht, wobei die ggf. subst. (Het)arylgruppe die folgende Bedeutung hat | | |
|---|---|---|
| **Nr.** | **ggf. subst. (Het)aryl** | **Literatur** |
| **I.7A-1** | 2-CH₃-C₆H₄ | EP-A 498 188 |
| **I.7A**-2 | 2,5-(CH₃)₂-C₆H₃ | EP-A 498 188 |
| **I.7A**-3 | 2,4-(CH₃)₂-C₆H₃ | EP-A 498 188 |
| **I.7A**-4 | 2,3,5-(CH₃)₃-C₆H₂ | EP-A 498 188 |
| **I.7A-5** | 2-CH₃, 4-C[CH₃]=NOCH₃-C₆H₃ | EP-A 498 188 |

**Tabelle 1.7B**

| Verbindungen der Formel IA, in denen Q Phenyl bedeutet, R' für *-C(COCH*_{*2*}*CH*_{*3*}*)=NOCH*_{*3*} steht, n den Wert 0 hat, R'' für ggf. subst. (Het)aryl-oxy steht, wobei die ggf. subst. (Het)arylgruppe die folgende Bedeutung hat | | |
|---|---|---|
| **Nr.** | **ggf. subst. (Het)aryl** | **Literatur** |
| **I.7B-1** | C₆H₅ | EP-A 498 188 |
| **I.7B-2** | 6-[2-CN-C₆H₄-O]-pyrimidin-4-yl | EP-A 498 188 |

**Tabelle 1.8A**

| Verbindungen der Formel IA, in denen Q Phenyl bedeutet, R' für *-N(OCH*_{*3*}*)-CO*_{*2*}*CH*_{*3*} steht, n den Wert 0 hat, R'' für ggf. subst. (Het)aryl-oxymethylen steht, wobei die ggf. subst. (Het)arylgruppe die folgende Bedeutung hat | | |
|---|---|---|
| **Nr.** | **ggf. subst. (Het)aryl** | **Literatur** |
| **I.8A-1** | 2-CH₃-C₆H₄ | WO-A 93/15,046 |
| **I.8A**-2 | 2,5-(CH₃)₂-C₆H₃ | WO-A 93/15,046 |
| **I.8A**-3 | 2,4-(CH₃)₂-C₆H₃ | WO-A 93/15,046 |
| **I.8A**-4 | 2,3,5-(CH₃)₃-C₆H₂ | WO-A 93/15,046 |
| **I.8A**-5 | 2-Cl, 5-CH₃-C₆H₃ | WO-A 93/15,046 |
| **I.8A**-6 | 2-CH₃, 4-C[CH₃]=NOCH₃-C₆H₃ | WO-A 93/15,046 |
| **I.8A**-7 | 2-CH₃, 4-C[CH₃]=NOCH₂CH₃-C₆H₃ | WO-A 93/15,046 |
| **I.8A**-8 | 2-CH₃, 4-C[CH₂CH₃]=NOCH₃-C₆H₃ | WO-A 93/15,046 |
| **I.8A**-9 | 2-CH₃, 4-C[CH₂CH₃]=NOCH₂CH₃-C₆H₃ | WO-A 93/15,046 |
| **I.8A**-10 | 1-[4-Cl-C₆H₄]-pyrazol-3-yl | DE Pat. Anm. 44 23 612.3 |

**Tabelle 1.8B**

| Verbindungen der Formel IA, in denen Q Phenyl bedeutet, R' für *-N(OCH*_{*3*}*)-CO*_{*2*}*CH*_{*3*} steht, n den Wert 0 hat, R'' für CH₂ON=CR^{α}R^{β} steht, wobei R^{α} und R^{β} die folgende Bedeutung haben | | | |
|---|---|---|---|
| **Nr.** | **R**^{**α**} | **R**^{**β**} | **Literatur** |
| **I.8B-1** | CH₃ | 3,5-Cl₂-C₆H₃ | WO-A 93/15,046 |

| Beispiele für insbesondere geeignete Wirkstoffe der Formel IIA sind in der folgenden Tabelle zusammengestellt | | | | |
|---|---|---|---|---|
| **Nr.** | **R**^{**1**} | **R**^{**2**} | **R**^{**3**} | **Literatur** |
| **IIA.1** | 2-OH-C₆H₅ | H | H | J. Am. Chem. Soc. 111, 114 (1989) |
| **IIA.2** | C₆H₅ | H | H | Org. Synth. Col.Vol. II, 67 (1943) |
| **IIA.3** | 3,5-Cl₂-C₆H₃ | CH₃ | H | analog zu J. Org. Chem. 24, 802 (1959) |
| **IIA.4** | 4-CH₃-C₆H₄ | H | H | J. Indian Chem. Soc. 51, 437 (1974) |
| **IIA.5** | 2-Cl-C₆H₄ | H | CH₃ | Tetrahedron 43, 5375 (1987) |
| **IIA.6** | 2,6-Cl₂-C₆H₃ | H | H | EP-A 133 155 |
| **IIA.7** | 3,5-Cl₂-C₆H₃ | H | H | J. Med. Chem. 13, 571 (1970) |
| **IIA.8** | 2-OH, 3,5-Br₂-C₆H₂ | H | H | Gazz. Chim. Ital. 78, 536 (1948) |
| **IIA.9** | 3-I-C₆H₄ | H | H | Bull. Acad. Pol. Sci. Ser. Sci. Chim. 12, 733 (1964) |
| **IIA.10** | 3-Cl-C₆H₄ | H | H | Bull. Acad. Pol. Sci. Ser. Sci. Chim. 12, 733 (1964) |

| Beispiele für insbesondere geeignete Wirkstoffe der Formel IIB sind in der folgenden Tabelle zusammengestellt | | | | |
|---|---|---|---|---|
| **Nr.** | **R**^{**a**} | **R**^{**b**} | **R**^{**c**} | **Literatur** |
| **IIB.1** | 2-CH₃-1,4-oxathiin-3-yl | H | C₆H₅ | Carboxin |
| | | | | US-A 3,249,499 |
| | | | | US-A 3,393,202 |
| | | | | US-A 3,454,391 |
| **IIB.2** | 2-CH₃-1,4-oxathiin-3-yl-4,4-dioxid | H | C₆H₅ | Oxycarboxin |
| | | | | US-A 3,399,214 |
| | | | | US-A 3,402,241 |
| | | | | US-A 3,454,391 |
| **IIB.3** | 2,4,5-(CH₃)₃-furan-3-yl | H | C₆H₅ | Methfuroxam |
| | | | | DE-A 20 06 471 |
| **IIB.5** | 2-I-C₆H₄ | H | C₆H₅ | Benodanil |
| | | | | DE-A 16 42 224 |
| **IIB.6** | 2-CH₃-C₆H₄ | H | 3-OCH(CH₃)₂-C₆H₄ | Mepronil |
| | | | | GB-A 1 421 112 |
| **IIB.7** | 2-CF₃-C₆-H₄ | H | 3-OCH(CH₃)₂-C₆H₄ | Flutolanil |
| | | | | JP-A 01/104,514 |
| **IIB.8** | 2-CH₃-furan-3-yl | H | C₆H₅ | Fenfuram |
| | | | | GB-A 1 215 066 |
| **IIB.9** | 2-CH₃-C₆H₄ | H | C₆H₅ | Mebenil |
| | | | | DE-A 16 42 224 |
| **IIB.10** | 2,4-(CH₃)₂-thiazol-5-yl | H | C₆H₅ | Metsulfovax |
| | | | | US-A 3,547,912 |
| | | | | US-A 3,505,055 |
| | | | | US-A 3,709,992 |
| | | | | US-A 3,725,427 |
| **IIB.11** | 2,5-(CH₃)₂-furan-3-yl | OCH₃ | Cyclohexyl | Furmecyclox |
| | | | | DE-A 24 55 082 |
| **IIB.12** | 2-Cl-pyridin-3-yl | H | 2,3-[CH(CH₃) CH₂C(CH₃)₂] -C₆H₃ | EP-A 256 503 |
| **IIB.13** | 2-CH₃, 4-CF₃-thiazol-5-yl | H | 2,6-Br₂, 4-OCF₃-C₆H₂ | EP-A 371 950 |

Bevorzugt setzt man bei der Bereitstellung der Mischungen die reinen Wirkstoffe IA bzw. IB und IIA bzw. IIb ein, denen man je nach Bedarf weitere Wirkstoffe gegen Schädlinge (z.B. Insekten, Spinntiere oder Nematoden) oder Schadpilze oder auch herbizide oder wachstumsregulierende Wirkstoffe oder Düngemittel beimischen kann.

Die Mischungen der Verbindungen IA bzw. IB und IIA bzw. IIB bzw. die gleichzeitige gemeinsame oder getrennte Verwendung der Verbindungen IA bzw. IB und IIA oder IA bzw. IB und IIB zeichnen sich durch eine hervorragende Wirkung gegen ein breites Spektrum insbesondere von pflanzenpathogenen Pilzen aus. Sie sind z.T. systemisch wirksam (d. h. sie können bei der Anwendung zum Pflanzenschutz ohne Wirkungsverlust von der behandelten Pflanze aufgenommen und ggf. in der Pflanze transportiert werden) und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Puccinia-Arten an Getreide, Rhizoctonia-Arten an Baumwolle und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren und Reben, Cercospora arachidicola an Ernüssen, Pseudocercosporella herpotrichoides an Weizen und Gerste, Pyricularia oryzae an Reis, Phytophthora infescans an Kartoffeln und Tomaten, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen IA bzw. IB und IIA bzw. IA bzw. IB und IIB können gleichzeitig gemeinsam oder ggetrennt oder nacheinander aufgebracht werden, wobei die Reihenfolge bei getrennter Applikation im allgemeinen keine Auswirkung auf den Bekämpfungserfolg hat.

Die Verbindungen IA bzw. IB und IIA werden üblicherweise in einem Gewichtsverhältnis von 5 : 10 bis 1 : 50, vorzugsweise 2 : 1 bis 1 : 20, insbesondere 1 : 1 bis 1 : 10 (I:IIA) angewendet.

Die Verbindungen IA bzw. IB und IIB werden üblicherweise in einem Gewichtsverhältnis von 10 : 1 bis 1 : 10, vorzugsweise 5 : 1 bis 1 : 5, insbesindere 2 : 1 bis 1 : 2 (I:IIB) angewendet.

Die Aufwandmengen der erfindungsgemäßen Mischungen liegen je nach der Art des gewünschten Effektes bei 0,015 bis 10 kg/ha, vorzugsweise 0,1 bis 7 kg/ha, insbesondere 0,2 bis 3 kg/ha.

Die Aufwandmengen liegen dabei für die Verbindungen IA und IB bei 0,005 bis 3 kg/ha, vorzugsweise 0,02 bis 2 kg/ha, insbesondere 0,05 bis 1 kg/ha.

Die Aufwandmengen für die Verbindungen IIA liegen im allgemeinen bei 0,05 bis 10 kg/ha, vorzugsweise 0,1 bis 5 kg/ha, insbesondere 0,2 bis 2 kg/ha.

Die Aufwandmengen für die Verbindungen IIB liegen im allgemeinen bei 0,01 bis 5 kg/ha, vorzugsweise 0,1 bis 2 kg/ha, insbesondere 0,2 bis 1 kg/ha.

Bei der Saatgutbehandlung werden im allgemeinen Aufwandmengen an Mischung von 0,001 bis 0,1 g/kg Saatgut, vorzugsweise 0,002 bis 0,05 g/kg Saatgut, insbesondere 0,005 bis 0,5 g/kg Saatgut verwendet.

Sofern für Pflanzen pathogene Schadpilze zu bekämpfen sind erfolgt die gemeinsame oder getrennte Applikation der Verbindungen IA bzw. IB und IIA bzw. IA bzw. IB und IIB oder der Mischungen aus den Verbindungen IA bzw. IB und IIA bzw. IA bzw. IB und IIB durch Besprühen oder Bestäuben der Samen, der Pflanzen oder der Böden vor oder nach der Aussaat der Pflanzen oder vor oder nach dem Keimen der Pflanzen.

Die erfindungsgemäßen fungiziden synergistischen Mischungen bzw. die Verbindungen IA bzw. IB und IIA bzw. IA bzw. IB und IIB können beispielsweise in Form von direkt versprühbaren Lösungen, Pulvern und Suspensionen oder in Form von hochprozentigen wäßrigen, öligen oder sonstigen Suspensionen, Dispersionen, Emulsionen, Öldispersionen, Pasten, Stäubemitteln, Streumitteln oder Ganulaten aufbereitet und durch Versprühen, Vernebeln, Verstäuben, Verstreuen oder Gießen angewendet werden. Die Anwendungsform ist abhängig vom Verwendugszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali- und Ammoniumsalze von aromatischen Sulfonsäuren, z.B. Lignin-, Phenol-, Naphthalin- und Dibutylnaphthalinsulfonsäure, sowie von Fettsäure, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolether, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol oder Tributylphenylpolyglycolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver, Streu- und Stäubemittel können durch Mischen oder gemeinsames Vermahlen der Verbindungen IA bzw. IB und IIA bzw. IA bzw. IB und IIB oder der Mischungen aus den Verbindungen IA bzw. IB und IIA bzw. IA bzw. IB und IIB mit einem festen Trägerstoff hergestellt werden.

Granulate (z.B. Umhüllungs-, Imprägnierungs- oder Homogengranulate) werden ublicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver und andere feste Trägerstoffe.

Die Formulierungen enthalten im allgemeinen 0,1 bis 95 Gew.-%, vorzugsweise 0,5 bis 90 Gew.-% einer der Verbindungen IA bzw. IB, IIA oder IIB oder der Mischung aus den Verbindungen IA bzw. IB und IIA bzw. IA bzw. IB und IIB.

Die Wirkstoffe werden dabei in einer Reinheit von 90% bis 100%, vorzugsweise 95% bis 100% (nach ¹H-NMR- oder HPLC-Spectrum) eingesetzt.

Die Verbindungen IA bzw. IB, IIA und IIB bzw. die Mischungen oder die entsprechenden Formulierungen werden angewendet, indem man die Schadpilze, ihren Lebensraum oder die vor Pilzbefall zu schutzenden Materialien, Pflanzen, Samen, Böden, Flächen oder Räume mit einer fungizid wirksamen Menge der Mischung bzw. der Verbindungen IA bzw. IB und IIA oder IA bzw. IB und IIB bei getrennter Ausbringung, behandelt. Die Behandlung kann vor oder nach dem Befall durch die Schadpilze erfolgen.

Die synergistische Wirkung der erfindungsgemäßen Mischungen ließ sich durch die folgenden Versuche zeigen:

### Laborversuche:

### Einfluß der erfindungsgemäßen Mischungen auf das Myclwachstum:

Agarplatten, die den Wirkstoff enthielten, wurden mit Mycel der Pilze beimpft. Je nach der art des Pilzes wurde nach 1 bis 4 Wochen das Wachstum der Pilze über einen Vergleich der Pilzkolonien einer unbehandelten Kontrolle und der behandelten Platten bestimmt [Angabe: Durchmesser (cm) der Pilzkolonie].

| Schadpilz | Kontrolle | **I.8A-7** [200 ppm] | **IIA.1** [100 ppm] | **I.8A-7** [200 ppm] **IIA.1** [100 ppm] |
|---|---|---|---|---|
| Alternaria solani | 8,5 | 7 | 8,5 | 3,6 |
| Botrytis cinerea | 8,5 | 8,5 | 8,5 | 6 |
| Choanephora cucurbitaru | 8,5 | 8,5 | 8,5 | 6,7 |
| Cladosporium herbarum | 4,5 | 0,7 | 3,1 | 0 |
| Cylindrocarpon mali | 4,2 | 1 | 3,7 | 0,6 |
| Drechslera sigmoidum | 8,5 | 1,5 | 8,5 | 1,1 |
| Drechslera teres | 8,5 | 6,5 | 8,5 | 5,4 |
| Fusarium oxysporum | 8 | 4 | 6,7 | 2,6 |
| Gloeosporium fructigenum | 8 | 3,4 | 7,8 | 2,7 |
| Guignardia citricarpa | 6 | 0,9 | 6,3 | 0 |
| Monilinia spec. | 6,3 | 5,2 | 5,7 | 0 |
| Penicillium digitatum | 5,7 | 3,1 | 5,4 | 0 |
| Penicillium expansum | 5,5 | 3,8 | 5 | 3,7 |
| Phomopsis lorgicola | 8,5 | 3,5 | 7,1 | 2 |
| Phytophthora cactorum | 7,7 | 4,5 | 4,3 | 2,6 |
| Pseudocercosporella herpotrichoides | 4,4 | 1,8 | 4 | 0,3 |
| Pyricularia oryzae | 7,5 | 2,6 | 6,8 | 2,1 |
| Phythium ultimun | 8,5 | 8,5 | 6,3 | 5,8 |
| Rhizopus stolonifer | 8,5 | 7,7 | 8,5 | 5,5 |
| Sclerotinia sclerotiorum | 8,5 | 8,5 | 8,5 | 4,2 |
| Sclerotium rolfsii | 8,5 | 2,7 | 6,8 | 2,1 |
| Septoria nodorum | 5,6 | 3,5 | 4,8 | 2,7 |
| Thielviopsis basicola | 6,8 | 3,5 | 2,5 | 0,9 |
| Venturia inaequalis | 2,9 | 1,5 | 1,5 | 0 |
| Verticilium dahliae | 3,2 | 0,4 | 2,2 | 0 |

### Sporenkeimungstest:

Suspensionen von Pilzsporen (Botrytis cinerea, 10⁶ Sporen / ml) in Mikrotiterplatten wurden nach Zusatz von Testlösung 24 h bei 18°C inkubiert. Anschließend wurde die Keimung unter dem Makroskop durch Schätzung des Wachstums im Vergleich mit unbehandelten Kontrollen bewertet. Die Bewertung erfolgte nach der folgenden Zuordnung:
- 0: Mehrzahl der Sporen ungekeimt (sehr gute Wirkung)
- (+): Sporen größtenteils gekeimt (≤ 5% Mycelwachstum)
- +: > 5% bis ≤ 50% Mycelwachstum
- ++: > 50% bis ≤ 80% Mycelwachstum
- +++: > 80% bis ≤ 100% Mycelwachstum (keine Wirkung)

| **I.2A-1 [ppm]** | **IIB.5 [ppm]** | **Bewertung** |
|---|---|---|
| 10 | - | +++ |
| _ | 5 | +++ |
| - | 10 | +++ |
| - | 25 | +++ |
| - | 50 | ++ |
| - | 100 | ++ |
| 10 | 5 | +++ |
| 10 | 10 | +++ |
| 10 | 25 | ++ |
| 10 | 50 | + |
| 10 | 100 | + |
| - | - | +++ |

| **I.2A-1 [ppm]** | **IIA.1 [ppm]** | **Bewertung** |
|---|---|---|
| 10 | - | + |
| - | 10 | +++ |
| - | 50 | +++ |
| - | 100 | +++ |
| 10 | 10 | (+) |
| 10 | 50 | (+) |
| 10 | 100 | 0 |
| - | - | +++ |

| **I.2A-1 [ppm]** | **IIA.2 [ppm]** | **Bewertung** |
|---|---|---|
| 10 | - | + |
| - | 10 | +++ |
| - | 50 | +++ |
| - | 100 | ++ |
| 10 | 10 | (+) |
| 10 | 50 | (+) |
| 10 | 100 | (+) |
| - | - | +++ |

| **I.2A-1 [ppm]** | **IIA.3 [ppm]** | **Bewertung** |
|---|---|---|
| 10 | - | + |
| - | 10 | +++ |
| - | 50 | +++ |
| - | 100 | +++ |
| 10 | 10 | + |
| 10 | 50 | (+) |
| 10 | 100 | 0 |
| - | - | +++ |

| **I.2A-1 [ppm]** | **IIA.4 [ppm]** | **Bewertung** |
|---|---|---|
| 10 | - | + |
| - | 10 | +++ |
| - | 50 | +++ |
| - | 100 | ++ |
| 10 | 10 | + |
| 10 | 50 | (+) |
| 10 | 100 | (+) |
| - | - | +++ |

| **I.2A-1 [ppm]** | **IIA.5 [ppm]** | **Bewertung** |
|---|---|---|
| 10 | - | + |
| - | 10 | +++ |
| - | 50 | +++ |
| - | 100 | ++ |
| 10 | 10 | + |
| 10 | 50 | + |
| 10 | 100 | (+) |
| - | - | +++ |

| **I.2A-1 [ppm]** | **IIA.6 [ppm]** | **Bewertung** |
|---|---|---|
| 10 | - | + |
| - | 10 | +++ |
| - | 50 | +++ |
| - | 100 | +++ |
| 10 | 10 | + |
| 10 | 50 | + |
| 10 | 100 | + |
| - | - | +++ |

| **I.2A-1 [ppm]** | **IIA.7 [ppm]** | **Bewertung** |
|---|---|---|
| 10 | - | + |
| - | 10 | +++ |
| - | 50 | +++ |
| - | 100 | ++ |
| 10 | 10 | (+) |
| 10 | 50 | 0 |
| 10 | 100 | 0 |
| - | - | +++ |

| **I.2A-1 [ppm]** | **IIA.8 [ppm]** | **Bewertung** |
|---|---|---|
| 10 | - | + |
| - | 10 | +++ |
| - | 50 | +++ |
| - | 100 | ++ |
| 10 | 10 | (+) |
| 10 | 50 | 0 |
| 10 | 100 | 0 |
| - | - | +++ |

### Gewächshausversuche:

Die Wirkstoffe wurden als 20%-ige Bmulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethorylierter Alkylphenole) und 10 Gew.-% Emulphor® EL (Emulan® EL, Emulgator auf der Basis ethorylierter Fettalkohole) aufbereitet und entsprechend der gewünschten Konzentration mit Wasser verdünnt.

### Wirkung gegen Botrytis cinerea (Grauschimmel)

Paprikasämlinge (Sorte: "Neusiedler Ideal Elite") mit 4-5 Blättern wurden mit der Wirkstoffaufbereitung tropfnaß gespritzt. Nach dem Abtrocknen wurden die Pflanzen mit einer Konidienaufschwemmung des Pilzes *Botrytis cinerea* besprüht und 5 Tage bei 22-24°C bei hoher Luftfeuchtigkeit bewahrt. Die Auswertung erfolgte visuell.

| **I.2A-1** [ppm] | **IIA.1** [ppm] | Befall [%] |
|---|---|---|
| 250 | - | 18 |
| 125 | - | 8 |
| 63 | - | 10 |
| - | 250 | 35 |
| 250 | 250 | 6 |
| 125 | 250 | 2 |
| 63 | 250 | 7 |
| - | - | 45 |

### Wirkung gegen Botrytis cinerea (Grauschimmel)

Scheiben von grünen Paprikaschoten wurden mit der Wirkstoffaufbereitung tropfnaß gespritzt. Nach dem Abtrocknen wurden die Fruchtscheiben mit einer Sporensuspension des Pilzes *Botrytis cinerea* (1,7x10⁶ Sporen pro ml einer 2%-igen Biomalzlösung) besprüht und 4 Tage bei 18°C bei hoher Luftfeuchtigkeit bewahrt. Die Auswertung erfolgte visuell.

| **I.2A-1** [ppm] | **IIA.1** [ppm] | Befall [%] |
|---|---|---|
| 250 | - | 4 |
| 125 | - | 55 |
| 63 | - | 50 |
| - | 250 | 90 |
| 250 | 250 | 6 |
| 125 | 250 | 10 |
| 63 | 250 | 12 |
| - | - | 95 |

| **I.2A-1** [ppm] | **IIB.5** [ppm] | Befall [%] |
|---|---|---|
| 250 | - | 4 |
| 125 | - | 55 |
| 63 | - | 50 |
| - | 125 | 70 |
| - | 63 | 90 |
| - | 31 | 90 |
| 250 | 250 | 6 |
| 125 | 250 | 10 |
| 63 | 250 | 12 |
| 250 | 63 | 3 |
| 125 | 63 | 5 |
| 63 | 63 | 3 |
| - | - | 95 |

### Wirkung gengen Puccinia recondita (Weizenbraunrost)

Blätter von Weizensämlingen (Sorte "Kanzler") wurden mit Sporen des Braunrosts (*Pinccinia recondita*) bestäubt. Die so behandelten Pflanzen wurden 24 h bei 20-22°C und einer relativen Luftfeuchtigkeit von 90-95% inkubiert und anschließend mit der wäßrigen Wirkstoffaufbereitung behandelt. Nach weiteren 8 Tagen bei 20-22°C und 65-70% relativer Luftfeuchtigkeit wurde das Ausmaß der Pilzentwicklung ermittlelt. Die Auswertung erfolgte visuell.

| **I.2A-1** [ppm] | **IIB.5** [ppm] | Befall [%] |
|---|---|---|
| 250 | - | 15 |
| 125 | - | 20 |
| 63 | - | 25 |
| - | 125 | 30 |
| - | 63 | 40 |
| - | 31 | 30 |
| 250 | 250 | 1 |
| 125 | 250 | 3 |
| 63 | 250 | 5 |
| 250 | 63 | 5 |
| 125 | 63 | 5 |
| 63 | 63 | 15 |
| - | - | 60 |

| **I.2A-1** [ppm] | **IIA.1** [ppm] | Befall [%] |
|---|---|---|
| 250 | - | 4 |
| 125 | - | 55 |
| 63 | - | 50 |
| - | 250 | 90 |
| 250 | 250 | 6 |
| 125 | 250 | 10 |
| 63 | 250 | 12 |
| - | - | 95 |

## Patentansprüche

1. Verfahren zur Bekämpfung von Schadpilzen, dadurch gekennzeichnet, daß man die Pilze, deren Lebensraum oder die vor Pilzbefall zu schützenden Materialien, Pflanzen, Samen, Boden, Flächen oder Räume gleichzeitig gemeinsam oder getrennt, oder nacheinander mit einem Wirkstoff I der Formel IA oder IB, 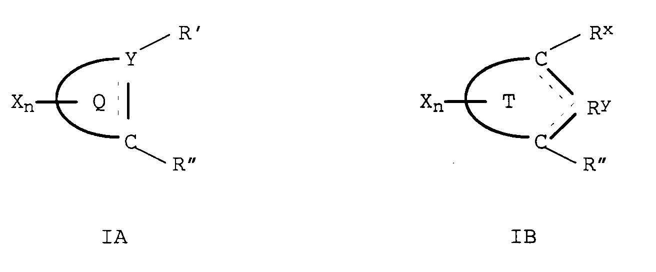 in denen der Index und die Substituenten die folgende Bedeutung haben:
R' -C[CO₂CH₃]=CHOCH₃, -C[CO₂CH₃]=NOCH₃, -C[CONHCH₃]=NOCH₃, -C[CO₂CH₃]=CHCH₃, -C[CO₂CH₃]=CHCH₂CH₃, -C[COCH₃]=NOCH₃, -C[COCH₂CH₃]=NOCH₃, -N(OCH₃)-CO₂CH₃, -N(CH₃)-CO₂CH₃, -N(CH₂CH₃)-CO₂CH₃,
R'' ein C-organischer Rest, welcher direkt oder über eine Oxy-, Marcapto-, Amino- oder Alkylaminogruppe gebunden ist,
zusammen mit einer Gruppe X und dem Ring Q bzw. T, an den sie gebunden sind, ein ggf. subst. bicyclisches, partiell oder vollständig ungesättigtes System, welches neben Kohlenstoffringgliedern Heteroatome aus der Gruppe Sauerstoff, Schwefel und Stickstoff enthalten kann,
R^{x} -OC[CO₂CH₃]=CHOCH₃, -OC[CO₂CH₃]=CHCH₃, -OC[CO₂CH₃]=CHCH₂CH₃, -SC[CO₂CH₃]=CHOCH₃, -SC[CO₂CH₃]=CHCH₃, -SC[CO₂CH₃]=CHCH₂CH₃, -N(CH₃)C[CO₂CH₃]=CHOCH₃, -N(CH₃)C[CO₂CH₃]=NOCH₃, -CH₂C[CO₂CH₃]=CHOCH₃, -CH₂C[CO₂CH₃]=NOCH₃, -CH₂C[CONHCH₃]=NOCH₃,
R^{y} Sauerstoff, Schwefel, =CH- oder =N-,
n 0, 1, 2 oder 3, wobei die Reste X verschieden sein können, wenn n > 1 ist;
X Cyano, Nitro, Halogen, C₁-C₄-Alkyl, C₁-C₄-Halogenylkyl, C₁-C₄-Alkoxy, C₁-C₄-Halogenalkoxy, C₁-C₄-Alkylthio oder für den Fall, daß n > 1 ist, eine an zwei benachbarte C-Atome des Phenylrings gebundene C₃-C₅-Alkylen-, C₃-C₅-Alkenylen-, Oxy-C₂-C₄-alkylen-, Oxy-C₁-C₃-alkylenoxy-, Oxy-C₂-C₄-alkenylen-, Oxy-C₂-C₄-alkenylenoxy- oder Butadiendiylgruppe, wobei diese Ketten ihrerseits ein bis drei der folgenden Reste tragen können: Halogen, C₁-C₄-Alkyl, C₁-C₄-Halogenalkyl, C₁-C₄-Alkoxy, C₁-C₄-Halogenalkoxy oder C₁-C₄-Alkylthio,
Y, =C- oder -N-,
Q Phenyl, Pyrrolyl, Thienyl, Furyl, Pyrazolyl, Imidazolyl, Oxazolyl, Isoxazolyl, Thiazolyl, Thiadiazolyl, Triazolyl, Pyridinyl, 2-Pyridonyl, Pyrimidinyl und Triazinyl,
T Phenyl, Oxazolyl, Thiazolyl, Thiadiazolyl, Oxadiazolyl, Pyridinyl, Pyrimidinyl und Triazinyl
und einer synergistischen Menge
a) eines Wirkstoffs der Formel IIA 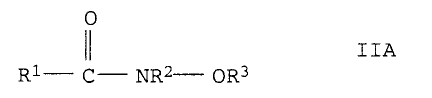 behandelt, in der die Substituenten die folgende Bedeutung haben:
R¹ Wasserstoff,
C₁-C₁₀-Alkyl, C₂-C₁₀-Alkenyl oder C₃-C₁₀-Alkinyl, C₃-C₈-Cycloalkyl oder C₄-C₈-Cycloalkenyl, Aryl, Hetaryl, Heterocyclyl, Arylcarbonyl, Hetarylcarbonyl, wobei die Reste partiell oder vollständig halogeniert sein können und/oder ein bis drei der folgenden Gruppen tragen können:
- Cyano, Nitro, Hydroxy, Mercapto, Amino, Carboxyl, Aminocarbonyl, Aminothiocarbonyl, C₁-C₆-Alkyl, C₁-C₆-Halogenalkyl, C₁-C₆-Alkylsulfonyl, C₁-C₆-Alkylsulfoxyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylaminothiocarbonyl, Di-C₁-C₆-alkylaminothiocarbonyl,
- C₂-C₆-Alkenyl, C₂-C₆-Alkenyloxy oder C₁-C₆-Alkylcarbonyl, wobei diese Gruppen partiell oder vollständig halogeniert sein können,
- C₃-C₆-Cycloalkyl, Benzyl, Benzyloxy, Aryl, Aryloxy, Arylthio, Hetaryl, Hetaryloxy oder Hetarylthio, wobei diese Gruppen partiell oder vollständig halogeniert sein können und/oder ein bis drei der folgenden Reste tragen können: Cyano, Nitro, Hydroxy, C₁-C₄-Alkyl, C₁-C₄-Halogenalkyl, C₁-C₄-Alkoxy, C₁-C₄-Halogenalkoxy oder C₁-C₄-Alkylthio,
- C(=NORⁱ)-Aₓ-Rⁱⁱ wobei Rⁱ,Rⁱⁱ unabhängig voneinander Wasserstoff
oder C₁-C₆-Alkyl bedeuten,
A für Sauerstoff, Schwefel, Amino oder Alkylamino steht und
x den Wert 0 oder 1 hat,
R²,R³ unabhängig voneinander Wasserstoff, C₁-C₆-Alkyl oder Aryl
oder einer synergistischen Menge
b) eines Wirkstoffs der Formel IIB 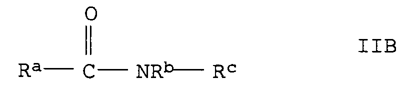 behandelt, in der die Substituenten die folgende Bedeutung haben:
R^{a} Phenyl, Furyl, Dihydropyranyl, Oxathiinyl, Oxathiinyldioxid, Pyridyl, Pyrazolyl oder Thiazolyl, wobei diese Reste ein bis drei der folgenden Substituenten tragen können: Halogen, C₁-C₄-Alkyl, C₁-C₄-Halogenalkyl, C₁-C₄-Alkoxy, C₁-C₄-Halogenalkoxy oder C₁-C₄-Alkylthio;
R^{b} Wasserstoff, C₁-C₄-Alkyl oder C₁-C₄-Alkoxy;
R^{c} Phenyl oder Cyclohexyl, wobei diese Ringe partiell oder vollständig halogeniert sein können und/oder ein bis drei der folgenden Reste tragen können: C₁-C₄-Alkyl, C₁-C₄-Halogenalkyl, C₁-C₄-Alkoxy, C₁-C₄-Halogenalkoxy oder C₁-C₄-Alkylthio,
behandelt.

2. Zur Bekämpfung von Schadpilzen geeignete synergistische Mischung, enthaltend einen festen oder flüssigen Trägerstoff, einen Wirkstoff der Formel I gemäß Anspruch 1 und eine synergistische Menge eines Wirkstoffs der Formel IIA gemäß Anspruch 1.

3. Zur Bekämpfung von Schadpilzen geeignete synergistische Mischung, enthaltend einen festen oder flüssigen Trägerstoff, einen Wirkstoff der Formel I gemäß Anspruch 1 und eine synergistische Menge eines Wirkstoffs der Formel IIB gemäß Anspruch 1.

4. Verwendung der Verbindungen IA oder IB gemäß Anspruch 1 zur Herstellung eines zur Bekämpfung von Schadpilzen geeigneten Mittels gemäß Anspruch 2 oder 3.

5. Verwendung der Verbindungen IIA gemäß Anspruch 1 zur Herstellung eines zur Bekämpfung von Schadpilzen geeigneten Mittels gemäß Anspruch 2.

6. Verwendung der Verbindungen IIB gemäß Anspruch 1 zur Herstellung eines zur Bekämpfung von Schadpilzen geeigneten Mittels gemäß Anspruch 3.

7. Verfahren nach Anspruch 1, dadurch gekennzeichnet, daß man zur Hemmung der Atmung am Cytochrom Komplex III einen Wirkstoff der Formel IA gemäß Anspruch 1 verwendet.

8. Verfahren nach Anspruch 1, dadurch gekennzeichnet, daß man zur Hemmung der Atmung am Cytochrom Komplex III einen Wirkstoff der Formel IB gemäß Anspruch 1 verwendet.

9. Mittel zur Durchführung des Verfahrens gemäß Anspruch 1, das in zwei Teilen konditioniert ist, wobei der eine Teil Verbindungen der Formel IA oder IB in einem festen oder flüssigen Träger und der andere Teil Verbindungen der Formel IIA oder IIB gemäß Anspruch 1 in einem festen oder flüssigen Träger enthält.

## Claims

1. A method for controlling harmful fungi, wherein the fungi, their habitat or the materials, plants, seed, soil, surfaces or spaces to be protected from fungal attack are treated jointly or separately at the same time or in succession with an active ingredient I of the formula IA or IB 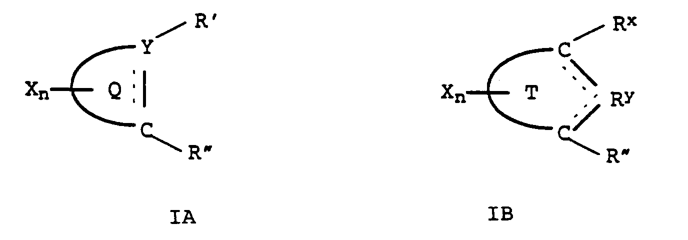 where
R' is -C[CO₂CH₃]=CHOCH₃, -C[CO₂CH₃]=NOCH₃, -C[CONHCH₃]=NOCH₃, -C[CO₂CH₃]=CHCH₃, -C[CO₂CH₃]=CHCH₂CH₃, -C[COCH₃]=NOCH₃, -C[COCH₂CH₃]=NOCH₃, -N(OCH₃)-CO₂CH₃, -N(CH₃)-CO₂CH₃ or -N(CH₂CH₃)-CO₂CH₃,
R'' is a C-organic radical, which is bonded directly or via an oxy, mercapto, amino or alkylamino group, or
together with a group X and the ring Q or T to which they are bonded, an unsubstituted or substituted bicyclic, partially or completely unsaturated system which, in addition to carbon ring members, may contain hetero atoms selected from the group consisting of oxygen, sulfur and nitrogen,
R^{x} is -OC[CO₂CH₃]=CHOCH₃, -OC[CO₂CH₃]=CHCH₃, -OC[CO₂CH₃]=CHCH₂CH₃, -SC[CO₂CH₃]=CHOCH₃, -SC[CO₂CH₃]=CHCH₃, -SC[CO₂CH₃]=CHCH₂CH₃, -N(CH₃)C[CO₂CH₃]=CHOCH₃, -N(CH₃)C[CO₂CH₃]=NOCH₃, -CH₂C[CO₂CH₃]=CHOCH₃, -CH₂C[CO₂CH₃]=NOCH₃ or -CH₂C[CONHCH₃]=NOCH₃,
R^{y} is oxygen, sulfur, =CH- oder =N-,
n is 0, 1, 2 or 3, and the radicals X may be different when n is > 1,
X is cyano, nitro, halogen, C₁-C₄-alkyl, C₁-C₄-haloalkyl, C₁-C₄-alkoxy, C₁-C₄-haloalkoxy, C₁-C₄-alkylthio or, where n is > 1, a C₃-C₅-alkylene, C₃-C₅-alkenylene, oxy-C₂-C₄-alkylene, oxy-C₁-C₃-alkyleneoxy, oxy-C₂-C₄-alkenylene, oxy-C₂-C₄-alkenyleneoxy or butadienediyl group bonded to two adjacent carbon atoms of the phenyl ring, where these chains in turn may carry from one to three of the following radicals: halogen, C₁-C₄-alkyl, C₁-C₄-haloalkyl, C₁-C₄-alkoxy, C₁-C₄-haloalkoxy or C₁-C₄-alkylthio,
Y is =C- or -N-,
Q is phenyl, pyrrolyl, thienyl, furyl, pyrazolyl, imidazolyl, oxazolyl, isoxazolyl, thiazolyl, thiadiazolyl, triazolyl, pyridinyl, 2-pyridonyl, pyrimidinyl or triazinyl and
T is phenyl, oxazolyl, thiazolyl, thiadiazolyl, oxadiazolyl, pyridinyl, pyrimidinyl or triazinyl,
and a synergistic amount of
a) an active ingredient of the formula IIA 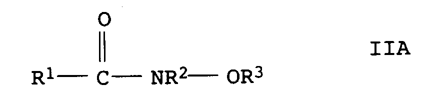 where
R¹ is hydrogen,
C₁-C₁₀-alkyl, C₂-C₁₀-alkenyl or C₃-C₁₀-alkynyl, C₃-C₈-cycloalkyl or C₄-C₈-cycloalkenyl, aryl, hetaryl, heterocyclyl, arylcarbonyl, hetarylcarbonyl, where the radicals may be partially or completely halogenated and/or may carry from one to three of the following groups:
- cyano, nitro, hydroxyl, mercapto, amino, carboxyl, aminocarbonyl, aminothiocarbonyl, C₁-C₆-alkyl, C₁-C₆-haloalkyl, C₁-C₆-alkylsulfonyl, C₁-C₆-alkylsulfoxyl, C₁-C₆-alkoxy, C₁-C₆-haloalkoxy, C₁-C₆-alkoxycarbonyl, C₁-C₆-alkylthio, C₁-C₆-alkylamino, di-C₁-C₆-alkylamino, C₁-C₆-alkylaminocarbonyl, di-C₁-C₆-alkylaminocarbonyl, C₁-C₆-alkylaminothiocarbonyl, di-C₁-C₆-alkylaminothiocarbonyl,
- C₂-C₆-alkenyl, C₂-C₆-alkenyloxy or C₁-C₆-alkylcarbonyl, where these groups may be partially or completely halogenated,
- C₃-C₆-cycloalkyl, benzyl, benzyloxy, aryl, aryloxy, arylthio, hetaryl, hetaryloxy or hetarylthio, where these groups may be partially or completely halogenated and/or may carry from one to three of the following radicals: cyano, nitro, hydroxyl, C₁-C₄-alkyl, C₁-C₄-haloalkyl, C₁-C₄-alkoxy, C₁-C₄-haloalkoxy or C₁-C₄-alkylthio,
- C(=NORⁱ)-Aₓ-Rⁱⁱ where
Rⁱ,Rⁱⁱ independently of one another are each hydrogen or C₁-C₆-alkyl,
A is oxygen, sulfur, amino or alkylamino and
x is 0 or 1, and
R² and R³ independently of one another are each hydrogen, C₁-C₆-alkyl or aryl
or a synergistic amount of
b) an active ingredient of the formula IIB 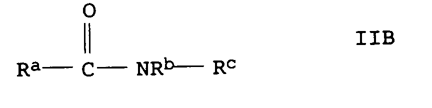 where
R^{a} is phenyl, furyl, dihydropyranyl, oxathiinyl, oxathiinyl dioxide, pyridyl, pyrazolyl or thiazolyl, where these radicals may carry from one to three of the following substituents: halogen, C₁-C₄-alkyl, C₁-C₄-haloalkyl, C₁-C₄-alkoxy, C₁-C₄-haloalkoxy or C₁-C₄-alkylthio;
R^{b} is hydrogen, C₁-C₄-alkyl or C₁-C₄-alkoxy;
R^{c} is phenyl or cyclohexyl, where these rings may be partially or completely halogenated and/or may carry from one to three of the following radicals: C₁-C₄-alkyl, C₁-C₄-haloalkyl, C₁-C₄-alkoxy, C₁-C₄-haloalkoxy or C₁-C₄-alkylthio.

2. A synergistic mixture suitable for controlling harmful fungi and containing a solid or liquid carrier, an active ingredient of the formula I as claimed in claim 1, and a synergistic amount of an active ingredient of the formula IIA as claimed in claim 1.

3. A synergistic mixture suitable for controlling harmful fungi and containing a solid or liquid carrier, an active ingredient of the formula I as claimed in claim 1, and a synergistic amount of an active ingredient of the formula IIB as claimed in claim 1.

4. Use of a compound IA or IB as claimed in claim 1 for the preparation of an agent suitable for controlling harmful fungi, as claimed in claim 2 or 3.

5. Use of a compound IIA as claimed in claim 1 for the preparation of an agent suitable for controlling harmful fungi, as claimed in claim 2.

6. Use of a compound IIB as claimed in claim 1 for the preparation of an agent suitable for controlling harmful fungi, as claimed in claim 3.

7. A method as claimed in claim 1, wherein an active ingredient of the formula IA as claimed in claim 1 is used for inhibiting the respiration at the cytochrome complex III.

8. A method as claimed in claim 1, wherein an active ingredient of the formula IB as claimed in claim 1 is used for inhibiting the respiration at the cytochrome complex III.

9. An agent for carrying out the method as claimed in claim 1, which is conditioned in two parts, one part containing a compound of the formula Ia or Ib in a solid or liquid carrier and the other part containing a compound of the formula IIa or IIb as claimed in claim 1 in a solid or liquid carrier.

## Revendications

1. Procédé pour combattre les mycètes nuisibles, caractérisé par le fait que l'on traite les mycètes, leur habitat ou les matériaux, végétaux, semences, sols, aires ou locaux qu'on veut protéger contre une attaque par les mycètes, simultanément, ensemble ou séparément, ou successivement, par une substance active I de formule IA ou IB 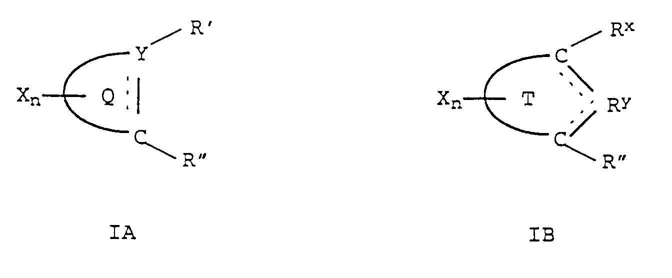 dans lesquelles l'indice et les symboles ont les significations suivantes :
R' : -C[CO₂CH₃]=CHOCH₃, -C[CO₂CH₃]=NOCH₃, -C[CONHCH₃]=NOCH₃, -C[CO₂CH₃]=CHCH₃, -C[CO₂CH₃]=CHCH₂CH₃, -C[COCH₃]=NOCH₃, -C[COCH₂CH₃]=NOCH₃, -N(OCH₃)-CO₂CH₃, -N(CH₃)-CO₂CH₃, -N(CH₂CH₃)-CO₂CH₃,
R'' : un radical organique carboné relié directement ou par l'intermédiaire d'un groupe oxy, mercapto, amino ou alkylamino,
ou bien, ensemble et avec un groupe X et le cycle Q ou T auquel ils sont reliés, un système bicyclique partiellement ou insaturé et éventuellement substitué qui, en plus des chaînons carbonés, peut contenir des hétéroatomes choisis parmi l'oxygène, le soufre et l'azote,
R^{x} : -OC[CO₂CH₃]=CHOCH₃, -OC[CO₂CH₃]=CHCH₃, -OC[CO₂CH₃]=CHCH₂CH₃, -SC[CO₂CH₃]=CHOCH₃, -SC[CO₂CH₃]=CHCH₃, -SC[CO₂CH₃]=CHCH₂CH₃, -N(CH₃)C[CO₂CH₃]=CHOCH₃, -N(CH₃)C[CO₂CH₃]=NOCH₃, -CH₂C[CO₂CH₃]=CHOCH₃, -CH₂C[CO₂CH₃]=NOCH₃, -CH₂C[CONHCH₃]=NOCH₃,
R^{y} : l'oxygène, le soufre, =CH- ou =N-,
n : 0, 1, 2 ou 3, les substituants X pouvant être différents lorsque n > 1 ;
X : cyano, nitro, halogéno, alkyle en C1-C4, halogénoalkyle en C1-C4, alcoxy en C1-C4, halogénoalcoxy en C1-C4, alkylthio en C1-C4 ou bien, lorsque n > 1, un groupe alkylène en C3-C5, alcénylène en C3-C5, oxyalkylène en C2-C4, oxy-alkylène en C1-C3-oxy, oxy-alcénylène en C2-C4, oxy-alcénylène en C2-C4-oxy ou butanidènediyle relié à deux atomes de carbone voisins du cycle phényle, ces chaînes pouvant elles-mêmes porter un à trois des substituants suivants : halogéno, alkyle en C1-C4, halogénoalkyle en C1-C4, alcoxy en C1-C4, halogénoalcoxy en C1-C4 ou alkylthio en C1-C4,
Y : =C- ou -N-,
Q : phényle, pyrrolyle, thiényle, furyle, pyrazolyle, imidazolyle, oxazolyle, isoxazolyle, thiazolyle, thiadiazolyle, triazolyle, pyridinyle, 2-pyridonyle, pyrimidinyle et triazinyle,
T : phényle, oxazolyle, thiazolyle, thiadiazolyle, oxadiazolyle, pyridinyle, pyrimidinyle et triazinyle
et une quantité synergique
a) d'une substance active de formule IIA 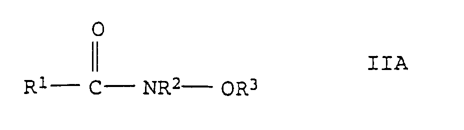 dans laquelle les symboles ont les significations suivantes :
R¹ : l'hydrogène,
un groupe alkyle en C1-C10, alcényle en C2-C10 ou alcynyle en C3-C10, cycloalkyle en C3-C8 ou cycloalcényle en C4-C8,
aryle, hétéroayle, hétérocyclyle, arylcarbonyle, hétéroarylcarbonyle, ces groupes pouvant être partiellement ou totalement halogénés et/ou porter un à trois des substituants suivants :
- cyano, nitro, hydroxy, mercapto, amino, carboxyle, aminocarbonyle, aminothiocarbonyle, alkyle en C1-C6, halogénoalkyle en C1-C6, alkylsulfonyle en C1-C6, alkylsulfoxyle en C1-C6, alcoxy en C1-C6, halogénoalcoxy en C1-C6, (alcoxy en C1-C6)carbonyle, alkylthio en C1-C6, alkylamino en C1-C6, di-(alkyle en C1-C6)amino, (alkyle en C1-C6)aminocarbonyle, di-(alkyle en C1-C6)aminocarbonyle, (alkyle en C1-C6)aminothiocarbonyle, di-(alkyle en C1-C6)aminothiocarbonyle,
- alcényle en C2-C6, alcényloxy en C2-C6 ou (alkyle en C1-C6)carbonyle, ces groupes pouvant être partiellement ou totalement halogénés,
- cycloalkyle en C3-C6, benzyle, benzyloxy, aryle, aryloxy, arylthio, hétéroaryle, hétéroaryloxy ou hétéroarylthio, ces groupes pouvant être partiellement ou totalement halogénés et/ou porter un à trois des substituants suivants : cyano, nitro, hydroxy, alkyle en C1-C4, halogénoalkyle en C1-C4, alcoxy en C1-C4, halogénoalcoxy en C1-C4 ou alkylthio en C1-C4,
- C(=NORⁱ)-Aₓ-Rⁱⁱ dans lequel
Rⁱ et Rⁱⁱ représentent chacun, indépendamment l'un de l'autre, l'hydrogène ou un groupe alkyle en C1-C6,
A représente l'oxygène, le soufre, un groupe amino ou alkylamino et
x est égal à 0 ou 1,
R² et R³ représentent chacun, indépendamment l'un de l'autre, l'hydrogène, un groupe alkyle en C1-C6 ou aryle,
ou bien une quantité synergique
b) d'une substance active de formule IIB 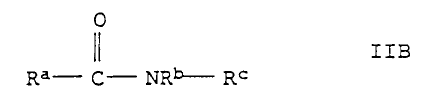 dans laquelle les symboles ont les significations suivantes :
R^{a} : un groupe phényle, furyle, dihydropyrannyle, oxathiinyle, oxathiinyle-dioxyde, pyridyle, pyrazolyle ou thiazolyle, ces groupes pouvant porter un à trois des substituants suivants : halogéno, alkyle en C1-C4, halogénoalkyle en C1-C4, alcoxy en C1-C4, halogénoalcoxy en C1-C4 ou alkylthio en C1-C4;
R^{b} : l'hydrogène, un groupe alkyle en C1-C4 ou alcoxy en C1-C4 ;
R^{c} : un groupe phényle ou cyclohexyle, dont les cycles peuvent être partiellement ou totalement halogénés et/ou peuvent porter un à trois des substituants suivants : alkyle en C1-C4, halogénoalkyle en C1-C4, alcoxy en C1-C4, halogénoalcoxy en C1-C4 ou alkylthio en C1-C4.

2. Mélange synergique convenant à l'utilisation pour la lutte contre les mycètes nuisibles, qui contient un véhicule solide ou liquide, une substance active de formule I selon la revendication 1 et une quantité synergique d'une substance active de formule IIA selon la revendication 1.

3. Mélange synergique convenant à l'utilisation pour la lutte contre les mycètes nuisibles, qui contient un véhicule solide ou liquide, une substance active de formule I selon la revendication 1 et une quantité synergique d'une substance active de formule IIB selon la revendication 1.

4. Utilisation des composés IA ou IB selon la revendication 1 pour la préparation d'un mélange convenant à l'utilisation pour la lutte contre les mycètes nuisibles selon la revendication 2 ou 3.

5. Utilisation des composés IIA selon la revendication 1 pour la préparation d'un produit convenant à l'utilisation pour la lutte contre les mycètes nuisibles selon la revendication 2.

6. Utilisation des composés IIB selon la revendication 1 pour la préparation d'un produit approprié à l'utilisation dans la lutte contre les mycètes nuisibles selon la revendication 3.

7. Procédé selon la revendication 1, caractérisé par le fait que l'on utilise une substance active de formule IA selon la revendication 1 pour inhiber la respiration au Cytochrom Komplex III.

8. Procédé selon la revendication 1, caractérisé par le fait que l'on utilise une substance active de formule IB selon la revendication 1 pour inhiber la respiration au Cytochrom Komplex III.

9. Produit pour la mise en oeuvre du procédé selon la revendication 1, conditionné en deux parties, dont l'une contient des composés de formule IA ou IB dans un véhicule solide ou liquide et l'autre des composés de formule IIA ou IIB selon la revendication 1 dans un véhicule solide ou liquide.
